# EUROPEAN PATENT APPLICATION

(11) **EP 4 579 218 A1**
(43) Date of publication of application: **02.07.2025**
(21) Application number: 24223436.7
(22) Date of filing: 27.12.2024
(51) Int. Cl.: G01N 21/15, G01N 21/53

(54) **A TURBIDITY METER AND A METHOD FOR CLEANING THE SAME**

(30) Priority: 27.12.2023 US 202363614946 P
(71) Applicant: Pentair, Inc., Minneapolis, Minnesota 55416 (US)
(72) Inventor: KERSHARWANI, Mukesh Chandra, Kaushambi (IN); SAINI, Anuj, Ghaziabad (IN); TULO, Ajit, Greater Noida (IN); GUPTA, Deelep, Greater Noida (IN); SRIVASTAV, Alok, New Delhi (IN)
(74) Representative: Viering, Jentschura & Partner mbB Patent- und Rechtsanwälte

(57) **Abstract**

A turbidity meter and a method for cleaning the turbidity meter are provided. An example turbidity meter may include a cuvette designed to receive fluid, wherein the cuvette comprises a first end, a second end, and an internal surface. The turbidity meter may also include a cuvette cleaning blade positioned between the first end and the second end of the cuvette. The turbidity meter may further include a movement device designed to move the cuvette cleaning blade across the internal surface of the cuvette, wherein the cleaning blade is designed to be circumferentially rotated, vertically moved, or combinations thereof.

## Description

### CROSS-REFERENCE TO RELATED APPLICATIONS

This Application claims priority to U.S. Provisional Patent Application Serial No. 63/614,946, filed on December 27, 2023, entitled "A TURBIDITY METER AND A METHOD FOR CLEANING THE SAME," the entire disclosure of which is incorporated herein by reference.

### TECHNICAL FIELD

The present disclosure relates to fluid quality monitoring. More particularly, the embodiment of the present disclosure relates to a fluid turbidity meter and a method for cleaning a cuvette of the turbidity meter.

### BACKGROUND

Turbidity meters measure turbidity of fluid for quality purposes. Such turbidity meters are either connected in an in-line manner to a fluid source or function as stand-alone meters to check the quality of a fluid. Regardless of how the turbidity meters are connected, the fluid within the cuvette can be measured to check the turbidity of the fluid.

When dirt accumulates inside the cuvette of the turbidity meter, the turbidity meter provides incorrect turbidity readings of the fluid. Thus, cleaning the cuvette of the turbidity meter becomes crucial. At present, the cuvette of the turbidity meter is manually cleaned by a technician or a user to remove the dirt from inside the cuvette of the turbidity meter. Thus, the existing cleaning process is time-consuming, complicated, and requires manual efforts.

### SUMMARY

A turbidity meter is provided. The turbidity meter may include a cuvette designed to receive fluid, wherein the cuvette includes a first end, a second end, and an internal surface. The turbidity meter may further include a cuvette cleaning blade positioned between the first end and the second end of the cuvette. The turbidity meter may also include a movement device designed to move the cuvette cleaning blade across the internal surface of the cuvette. The cuvette cleaning blade may be designed to be circumferentially rotated, vertically moved, or combinations thereof.

In some instances, the turbidity meter may include a controller in communication with the movement device, where the controller is designed to instruct the movement device to actuate the cuvette cleaning blade based at least in part on a turbidity level being equal to or above a threshold turbidity. The controller may be further designed to receive one or more signals from a control unit over a wired or wireless connection. Additionally, the one or more signals may instruct the controller to cause the movement device to move the cuvette cleaning blade across the internal surface of the cuvette.

In some examples, the turbidity meter may include a cuvette shroud with an alignment portion and a printed circuit board positioned on the cuvette shroud. Additionally, the turbidity meter may include a circuit mounted on the printed circuit board including one or more light emitting diodes (LEDs) and one or more photodiodes. The circuit may be designed to determine the turbidity level of a fluid inside the cuvette and output one or more signals to the controller to actuate the cuvette based at least in part on the turbidity level. The one or more LEDs may be positioned on the printed circuit board across from at least one of the one or more photodiodes.

In some instances, the controller may be further designed to conclude a cleaning cycle after the movement device actuates the cuvette cleaning blade according to a cleaning threshold.

Examples of the movement device may be in the form of a direct current motor, a stepper motor, a servo motor, or an actuator.

The cuvette cleaning blade may be capable of actuating in a clockwise rotation along the internal surface of the cuvette or in a counterclockwise rotation along the internal surface of the cuvette. In some instances, the cuvette cleaning blade may be in the form of a helical shape, a flat shape or a straight shape, a disc shape, or a cylindrical shape. In some examples, the cuvette cleaning blade may be a form of silicon, a rubber material, or a flexible membrane.

Some examples of the turbidity meter may include a rotational shaft designed to connect the movement device to a proximal end of the cuvette. In some instances, the turbidity meter may include an output device designed to output an indication of a turbidity level of a fluid inside the cuvette.

A turbidity meter system is provided. The turbidity meter system may include a controller including a communication module designed to transmit and receive signals. The turbidity meter system may further include a cuvette designed to receive fluid, where the cuvette includes an internal surface and an external surface. The turbidity meter system may also include a cuvette cleaning blade proximate to the internal surface of the cuvette. The turbidity meter system may further include a movement device in communication with the controller, where the movement device may be designed to move the cuvette cleaning blade across the internal surface of the cuvette based at least in part on instructions from the controller.

In some instances, the controller may receive one or more signals indicating a plurality of threshold limits associated with a customizable cycle threshold related to operating the cuvette cleaning blade.

In some examples, the controller may be further designed to transmit a signal indicating a status of the turbidity meter system to one or more mobile units via a wired connection or a wireless connection. The controller may be further designed to implement a cleaning cycle based on a turbidity level of a fluid within the cuvette.

A method for cleaning a cuvette of a turbidity meter provided. The method for cleaning a cuvette of a turbidity meter may include detecting light emitted from one or more LEDs at one or more photodiodes, where each of the one or more LEDs is positioned on an opposite side of the cuvette from a respective photodiode of the one or more photodiodes. The method may further include outputting one or more signals to a movement device connected to a cuvette cleaning blade to move the cuvette cleaning blade along an interior surface of the cuvette based at least in part on the detected light indicating a turbidity level of a fluid within the cuvette being equal to or above a threshold turbidity. The method may also include actuating the cuvette cleaning blade based at least in part on the one or more signals, wherein the cuvette cleaning blade is positioned between a first end and a second end of the cuvette.

In some examples where detecting the light emitted from one or more LEDs at one or more photodiodes may be at a first time and the turbidity level is a first turbidity level, the method may further include determining a second turbidity level of the fluid within the cuvette based on detecting light from one or more LEDs at one or more photodiodes at a second time. The second time may be after the first time and during a cleaning cycle. The method may further include completing the cleaning cycle when the turbidity level is within the threshold turbidity.

In some instances, the method may further include receiving one or more signals indicating a time interval for performing a calibration or cleaning cycle and performing the calibration or cleaning cycle based at least in part on the time interval.

The method may further include determining that the turbidity level of the fluid is below a second threshold turbidity, and actuating the cuvette cleaning blade in a partial rotation based at least in part on the turbidity level of the fluid being below a second threshold turbidity.

### BRIEF DESCRIPTION OF THE DRAWINGS

FIG. 1 schematically illustrates an example system including a turbidity meter, according to a disclosed example;
FIG. 2 depicts an example system including a turbidity meter, according to disclosed examples;
FIG. 3 schematically illustrates an example system including a turbidity meter, according to an additional disclosed example;
FIG. 4 is a front isometric view of an example turbidity meter, according to a disclosed example;
FIG. 5 is an exploded isometric view of the example turbidity meter of FIG. 4, according to a disclosed example;
FIG. 6 is a cross-sectional view along line 6-6 of the example turbidity meter of FIG. 4, according to a disclosed example;
FIG. 7 is a front isometric view of example internal components of the turbidity meter of FIG. 4, according to a disclosed example;
FIG. 8 is a cross-sectional view along line 8-8 of the example internal components of the turbidity meter of FIG. 7, according to a disclosed example;
FIG. 9 is another cross-sectional view along line 8-8 of the example internal components of the example turbidity meter of FIG. 7, according to a disclosed example;
FIG. 10 is a cross-sectional view along line 10-10 of the example turbidity meter of FIG. 7, according to a disclosed example;
FIG. 11 is a view of an example printed circuit board of a turbidity meter, according to a disclosed example;
FIG. 12 is a front isometric view of an example turbidity meter, according to a disclosed example;
FIG. 13 is an exploded isometric view of the example turbidity meter of FIG. 12, according to a disclosed example;
FIG. 14 is a cross-sectional view along line 14-14 of the example turbidity meter of FIG. 12, according to a disclosed example;
FIG. 15 is a front isometric view of internal components of the example turbidity meter of FIG. 12, according to a disclosed example;
FIG. 16A is a front isometric view of example internal components, according to a disclosed example;
FIG. 16B is a front isometric view of the example internal components, according to a disclosed example;
FIG. 17 is a cross-sectional view along line 17-17 of the disclosed example turbidity meter of FIG. 12, according to a disclosed example;
FIG. 18 is a view of another example printed circuit board of a turbidity meter, according to a disclosed example;
FIG. 19 is a flow chart describing an example method for a turbidity meter, according to a disclosed example; and
FIG. 20 is another flow chart describing an example method for a turbidity meter, according to a disclosed example.

### DETAILED DESCRIPTION

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the disclosure. Various modifications to the illustrated embodiments will be readily apparent to those skilled in the art, and generic principles presented herein can be applied to other embodiments and applications without departing from embodiments of the disclosure. Thus, embodiments of the disclosure are not intended to be limited to embodiments shown but are to be accorded the widest scope consistent with the principles and features disclosed herein. The following detailed description is to be read with reference to the FIGs., in which like elements in different figures have like reference numerals. The FIGs., which are not necessarily to scale, depict selected embodiments and are not intended to limit the scope of embodiments of the disclosure. Skilled artisans will recognize the examples provided herein have many useful alternatives and fall within the scope of embodiments of the disclosure.

As described herein, examples of turbidity meters are provided. Turbidity is a measure of suspended solids in a liquid. For example, a liquid may be clear when it has no or few suspended particles or may be opaque or nearly opaque when it has many suspended particles or other suspended or dissolved matter. A turbidity meter (also referred to as a turbidimeter) may provide a measurement of the solids suspended in a liquid, which may be a measurement of the cloudiness or haziness of the fluid. A turbidity meter may be utilized in different systems, such as swimming pools or spas, resorts or waterparks, wastewater facilities, and production facilities, among others. The turbidity may be used for quality control, system maintenance, filtration or sanitation purposes, to determine phase changes, for detecting separation of products, or for other purposes.

Turbidity meters may include one or more containers, such as cuvettes, to hold a sample of the fluid that is to be measured. The fluid sample may be contained within the cuvette while a sensing circuit measures the turbidity of the fluid sample. The cuvette may be transparent to allow light emitted from the sensing circuit to pass into the fluid, such that the turbidity of the fluid sample may be determined from a detector of the sensing circuit receiving light that escaped the fluid sample. However, with use over time, an inner surface of the cuvette may become dirty or less transparent. Because the fluid sample may contain solids, some of these solids may stick to or otherwise adhere to an internal surface of the cuvette. The solids may be, for example, dirt, soil, foliage, or other debris, contaminants containing bacteria or pathogens, bodily oils or secretions, suntan lotion, and other substances, contaminants or debris from animals, byproducts from contaminants reacting with disinfectant or other chemicals, solids separating out of solution, liquids phase changing to solids, among other sources. These particles or other contaminants sticking to the cuvette may result in inaccurate turbidity measurements because they may cause less light to be received at the detector than otherwise should be, based on a number of suspending particles in the fluid sample.

Example turbidity meters described herein may include components that enable the turbidity meters to clean the internal surface of their cuvettes. An example turbidity meter may include a cuvette cleaning blade, a shaft, a movement device, and a control unit. The control unit may cause the movement device to clean the internal surface of the cuvette by moving the shaft, which is attached to the cuvette cleaning blade. The cuvette cleaning blade may scrape along or otherwise move across the internal surface of the cuvette, dislodging debris, dirt, or other contaminants from the inner surface of the cuvette. This action of the cuvette cleaning blade cleans the cuvette, which may improve turbidity readings.

The systems, devices, and techniques described herein may enable the turbidity meter to perform self-cleaning operations, which may be automatic based on one or more criteria or upon request from an operator. Additionally, the systems, devices, and techniques reduce time and effort that would otherwise be required to manually clean a cuvette. Manual cleaning may entail disassembling a system or device to access the turbidity meter, removing the turbidity meter or cuvette, and manually washing the cuvette. The systems, devices, and techniques may further improve the lifetime of different components or devices of a system by providing more accurate turbidity readings, which may be used to help indicate when the different components or devices may need to be replaced, cleaned, or otherwise maintained. Furthermore, the systems, devices, and techniques may, for example, reduce energy costs, reduce costs for replacing parts, reduce operator or technician time, improve productivity, improve product quality, and improve user experience of the system.

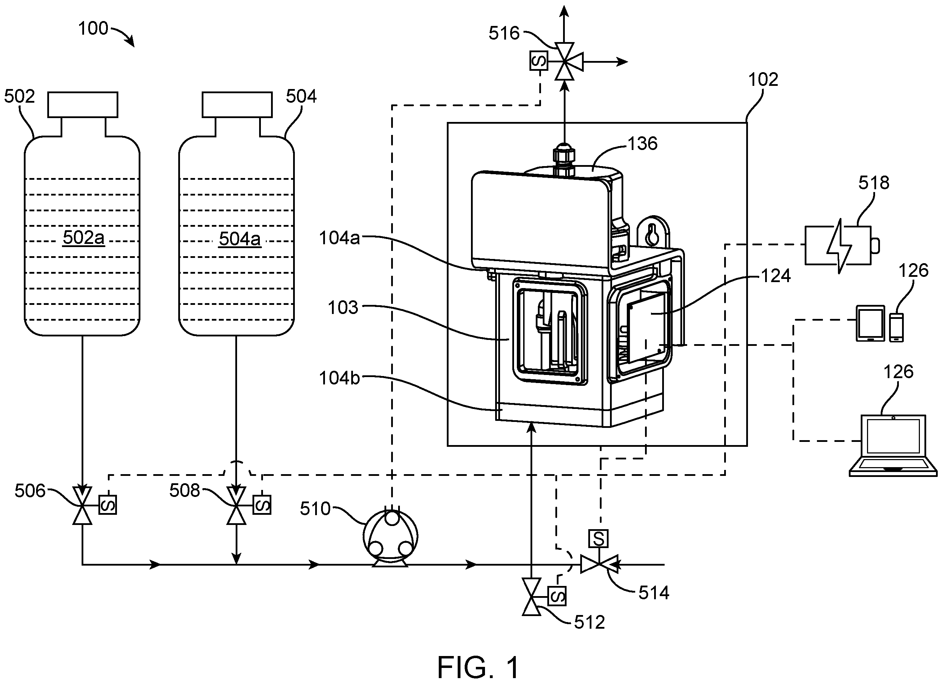

Referring now to FIG. 1, a schematic diagram of an example turbidity meter 102 within a system 100 is shown, according to examples described herein. The turbidity meter 102 may measure transparency of a fluid sample to determine a turbidity of the fluid sample. The turbidity may be correlated with a cleanliness of the fluid sample. To measure turbidity, the turbidity meter 102 may be capable of emitting light and detecting the amount of light that is reflected from or transmitted through the fluid sample. The turbidity meter 102 may output different units of turbidity, such as the Nephelometric Turbidity unit (NTU) or the Formazin Nephelometric unit (FNU), or other turbidity unit. In some examples, the choice of unit may depend on the wavelength of the emitted light. In FIG. 1, the dotted or dashed lines represent electrical lines or connections, while the solid lines represent fluid flow lines or paths.

The turbidity meter 102 may be used within fluid filtration systems for fluid quality monitoring and measurement, or in other applications. For example, the turbidity meter 102 may be utilized for operating and maintaining a residential or commercial aquatic system. In some instances, the turbidity meter 102 may be used with an aquatic system such as a swimming pool or spa. A "swimming pool" or "pool" may refer to a body in which the water is accumulated and is used for the purpose of swimming, bathing, or the like. For example, the system 100 may include a swimming pool with the turbidity meter 102 designed for use and in communication with the swimming pool. In other examples, the system 100 may include a spa and include the turbidity meter 102 designed for use with a spa. In other instances, the system 100 may include a pool and a spa and include components, including the turbidity meter 102, which may be used with a pool and spa system. In yet other instances, the system 100 may be designed for use with a pool or a spa in a residential setting or a commercial setting. More particularly, the system 100 may be provided within a commercial or resident swimming pool, a hot tub, a spa, a plunge pool, and other recreational water venues not specifically discussed herein. When used throughout the disclosure, it will be understood that a "swimming pool" may refer to any of these alternatives. In additional examples, one or more components may be included for an aquarium, home or commercial filtration system, wastewater treatment facility, and other fluid filtration systems that may utilize fluid quality monitoring.

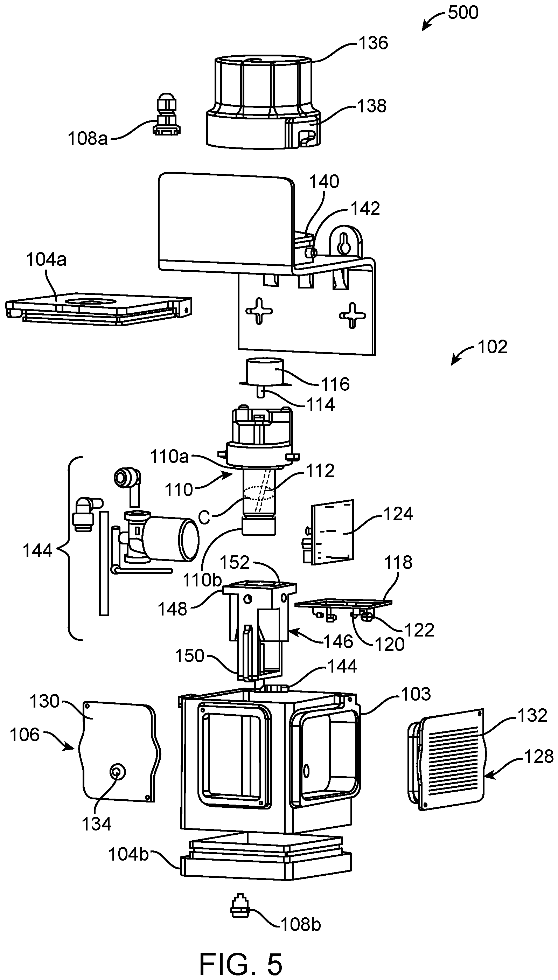

The turbidity meter 102 may include a housing 103 having a first side 104a and a second side 104b. The housing 103 may also include a display cover and a control unit cover, which are removed in FIG. 1 for illustration purposes to show inside the housing 103 (examples of the display cover and the control unit cover are described below with reference to FIG. 5). The turbidity meter 102 may further include a control unit 124, one or more power sources 518, an inlet 108b, and an outlet 108a.

The system 100 may also include a first container 502 having a first solution 502a and a second container 504 having a second solution 504a. The first solution 502a and the second solution 504a may be in the form of fluids with pre-defined turbidity levels. The first solution 502a and the second solution 504a may be selected by a manufacturer or user depending on the type of turbidity measurements being captured by the turbidity meter 102.

The system 100 may also include a pump 510, a plurality of mobile units 126, a power source 518, a three-way valve 516, and a plurality of two-way valves. The two-way valves may include a first two-way valve 506, a second two-way valve 508, a third two-way valve 512, and a fourth two-way valve 514. In other examples, the system 100 may include other components and other numbers of valves.

For example, the first container 502, the second container 504, the pump 510, the plurality of mobile units 126, the one or more power sources 518, the three-way valve 516, and the plurality of two-way valves 506, 508, 512, and 514 may be wired or wirelessly coupled in communication with the turbidity meter 102. Additionally, although FIG. 1 shows a certain number of each of the described elements of the system 100, in other examples, other numbers of at least some of the described elements may be included. For example, more than one type of container, two-way valve, or pump may be included, creating a variation between the duplicates of the system 100 within FIG. 1. In other examples, fewer elements within the system 100 may be included.

At least some of the elements included within the system 100 or turbidity meter 102 may be in communication with the one or more power sources 518. Furthermore, some of the elements described herein may be in communication with other elements of the system 100 or turbidity meter 102.

The pump 510 may be in the form of a peristaltic pump, a submersible pump, a centrifugal pump, or another type of pump within the art. The valves of the system 100 including the three-way valve 516 and the two-way valves 506, 508, 512, and 514 may be in the form of direct acting valve including an electromagnetic valve, solenoid valve, a normally closed (NC) valve, a normally open (NO) valve, and additional two-way or three-way valves known within the art. Additionally, the two-way valves 506, 508, 512, and 514 and three-way valve 516 may be in the form of manual valves, which may be capable of being coupled to the system 100 and/or the turbidity meter 102.

Further, the system 100 may include one or more controllers, including a control unit 124. In some examples, the control unit 124 may be incorporated within the turbidity meter 102 within its housing 103, while in other examples, the control unit 124 may be external to the turbidity meter 102. The control unit 124 may be capable of communicating with a plurality of elements within the system 100, as well as with external devices and networks. The control unit 124 may be in the form of a hardwire control unit, microprogrammed control unit, multicycle control unit, a processing unit, or other known control units within the art. The control unit 124 may operate as a central controller or a local controller. In some examples, a central controller may control more than one component of the system 100 or may control all of the components of the system 100. In some examples, a local controller may control only a single component of the system 100 or may control a subset of components of the system 100. For example, a local controller may be associated with one or more individual components associated with the system 100 (e.g., a turbidity meter controller, a pump controller, a heater controller, etc.). In other examples, in addition to the control unit 124, the system 100 may include additional controllers, such as local controllers for the one or more individual components. Examples of the system 100 may also include a central controller which is in communication with the control unit 124. These example controllers and control units may allow for direct control of various components and devices within the system 100. Various communication methodologies and connections may be implemented to enable communication between the controllers and control units.

The control unit 124 may be designed to interface with one or more mobile units 126. The plurality of mobile units 126 may be provided in the form of a user device, a wireless device, a user equipment, a remote device, a handheld device, or a subscriber device, or some other suitable terminology, where the "device" may also be referred to as a unit, a station, a terminal, or a client, among other examples. The mobile unit 126 may be provided in the form of a personal electronic device such as a cellular phone, a personal digital assistant (PDA), a tablet computer, a laptop computer, a personal computer, a smartwatch, or a similar device. In some examples, the mobile unit 126 may include or be referred to as a wireless local loop (WLL) station, an Internet of Things (IoT) device, an Internet of Everything (IoE) device, or a machine type communications (MTC) device, among other examples, which may be implemented in various objects such as appliances, vehicles, or meters, among other examples.

As used herein, the wired connection may refer to ethernet connections, universal serial bus (USB) connections, serial connections, etc. Additionally, the wireless connection may refer to a cellular network (i.e., Global System for Mobile Communication (GSM), Long-Term Evolution (LTE), Code Division Multiple Access (CDMA), etc.), short-range network (such as Bluetooth, Near-field communication (NFC), etc.).

Within the example system 100 of FIG. 1, the turbidity meter 102 and its control unit 124 may be physically and/or wirelessly coupled to the containers 502 and 504, the pump 510, the three-way valve 516, and the two-way valves 506, 508, 512, and 514. Further, the elements included within the system 100 may be coupled to the power source 518 to receive electrical power. The power source 518 may be in the form of a standard electrical outlet, 15A 120V outlet, 20A 120V outlet, high-power electrical outlet, 30A 240V outlet, 50A 240V outlet, portable power source, or any additional power source known in the art.

System 100 shows components used to calibrate the turbidity meter 102. The first container 502 may be connected with the two-way first valve 506 through a fluid flow line and the second container 504 may be connected with the two-way second valve 508 through an additional fluid flow line. In additional aspects, one or more fluid flow lines may be coupled to the first container 502, the second container 504, the pump 510 or the two-way valves 506, 508, 512, and 514. In other aspects, a singular fluid flow line may be used to connect the first container 502, the second container 504, the pump 510 or the two-way valves 506, 508, 512, and 514 to the turbidity meter 102 within the system 100. The first container 502 may be filled with the first solution 502a, which may be used for calibration. The second container 504 may be filled with the second solution 504a used for an additional calibration measurement. The fluid inlet 108b associated with the turbidity meter 102 may be connected with the two-way third valve 512 through a fluid flow line and the fluid outlet 108a of the turbidity meter 102 may be connected with the three-way valve 516 through a fluid flow line. The two-way fourth valve 514 may be connected to the fluid inlet 108b of the turbidity meter 102 through a fluid flow line. Thus, the two-way valve 514 may be also connected to a main fluid supply line which allows the fluid from the main fluid supply line to enter the fluid inlet 108b.

In some instances, one or more of the two-way valves 506, 508, 512, and 514 and the three-way valve 516 may be a solenoid valve. Moreover, the operation (i.e., closing and opening) of each of the two-way valves 506, 508, 512, and 514 and the three-way valve 516 may be controlled by the control unit 124 or another controller. The flow of fluid in the fluid flow lines may be controlled by the pump 510, which may be also controlled by the control unit 124 or another controller. While examples described herein illustrate the flow of the fluid from a bottom of the turbidity meter 102 to the top of the turbidity meter 102, other examples may reverse the flow direction. For example, the flow of fluid may enter the turbidity meter 102 at the top and exit the turbidity meter 102 at the bottom. Additionally, air (or other gasses) may also be introduced into or exited from the turbidity meter 102 via one or more of the two-way valves 506, 508, 512, and 514 or the three-way valve 516. In other examples, there may be an additional set of valves, gas flow lines, and ports into the turbidity meter 102 to enable gas (such as air) to move through the turbidity meter 102. Furthermore, alternative examples of the turbidity meter 102 may position the fluid inlet 108b and the fluid outlet 108a in different locations of the turbidity meter 102 than the examples illustrated in the Figures.

In a working mode, the turbidity meter 102 may operate as explained below. For example, the two-way valve 514 and the three-way valve 516 may be operated in an open state. Due to this, fluid from the main fluid supply line may enter the turbidity meter 102 through the fluid inlet 108b and exit the turbidity meter 102 through the fluid outlet 108a. Specifically, the fluid may exit the turbidity meter 102 through the three-way fifth valve 516.

In a calibration mode, the two-way valve 514 may be operated in a close state. Additionally, when the three-way valve 516 and the two-way valve 512 are operated in an open state, the prefilled fluid from the cuvette 110 of the turbidity meter 102 may be drained out through the fluid inlet 108b. During the process of draining the fluid from the cuvette 110, the other valves may be operated in a close state.

After the fluid from the cuvette 110 is drained, the two-way valve 512 may continue to operate in a closed state and the two-way valve 506 may be operated in an open state. In the calibration mode, the turbidity meter 102 may calibrate itself with the turbidity of the first solution 502a.

After calibrating the turbidity meter 102 with the turbidity of the first solution 502a, the two-way valve 512 may be operated in an open state for draining the first solution 502a from the turbidity meter 102 through the fluid inlet 108b. Further, the other valves may be operated in a close state.

Once the first solution 502a within the cuvette of the turbidity meter 102 is emptied, the two-way valve 508 may be operated in an open state and the two-way valve 506 may be operated in a closed state. In this state, the turbidity meter 102 may calibrate itself with the turbidity of the second solution 504a. Since the turbidity of the first solution 502a and the turbidity of the second solution 504a may be different, the turbidity meter 102 may be calibrated with solutions of different turbidities for accurate determination of the turbidity values of the fluid sample to be measured.

After calibrating the turbidity meter 102 with the turbidity of the second solution 504a, the two-way valve 512 and the three-way valve 516 may be operated in an open state for draining the second solution 504a from the cuvette of the turbidity meter 102 through the fluid inlet 108b. After the calibration mechanism is completed, all of the valves 506, 508, 512, 514, and 516 may be operated in a closed state.

In additional aspects, the control unit 124 may include a calibration mode capable of utilizing Artificial Intelligence (AI) or Machine Learning (ML) to determine a status of the turbidity meter 102 or to determine when to clean the turbidity meter 102. The status of the turbidity meter 102 may include a clean status, a dirty status, a needs maintenance status, or the like. The control unit 124 may activate a cleaning cycle when it determines that the turbidity meter 102 may benefit from cleaning. The control unit 124 may determine that the turbidity meter 102 may benefit from cleaning based on the status of the turbidity meter 102, an expiration of a time period since a last cleaning, a number of turbidity measurements taken, or the like. In other examples, AI or ML may be used to determine when to clean the turbidity meter 102 based at least in part on information from other components of the system 100. For example, if the system 100 is utilized in a swimming pool or spa, the control unit 124 may clean the turbidity meter 102 based on information related to a cleanliness of the swimming pool or spa. In other examples, the control unit 124 may be capable of storing past turbidity data to produce a desirable cleaning schedule based on historical data.

After calibration, the turbidity meter 102 may resume a normal working mode as described below for determining the turbidity of a fluid sample.

In some instances, switching between the normal working mode and the calibration working mode of the turbidity meter may be automatic. That is, the calibration mode may automatically be performed after the expiration of a pre-defined time interval (e.g., weekly, monthly, etc.). These predefined time intervals may be manually set up by a user or a technician via a display or user interface of the turbidity meter 102 and/or via a user interface of the control unit 124. Alternatively, the user or the technician may use a software application executed at the one or more mobile units 126 to remotely set up the predefined time interval. In some instances, the predefined time interval may be configured automatically by the control unit 124 based on a turbidity level of the fluid sample determined by the turbidity meter 102.

In some instances, switching between the normal working mode and the calibration working mode of the turbidity meter may be performed manually by the user or the technician. Additionally, switching between normal working mode and the calibration mode may be controlled by the one or more mobile units 126 or manually by the user.

In additional examples, the turbidity meter 102 system 100 may include a swimming pool or spa. The turbidity meter 102 may be connected in-line with a pool or spa piping system or as a stand-alone system capable of taking turbidity values of the water in the swimming pool or spa. The swimming pool or spa may be connected to at least some of the two-way valves 506, 508, 512, and 514 or the three-way valve 516 in place or in combination with the first container 502 or the second container 504 within the system 100. In additional aspects, one or more of the containers 502 and 504 may be the pool or spa.

According to the techniques and systems described herein, the fluid samples may be water (such as the water of a swimming pool or spa), one or more chemicals used in the chemical industry or in agriculture, beverages such as cold drinks, coffee, sparkling fluids, customized fluids, soft drinks, alcohol, tea, etc., or other types of fluid where it may be useful to know the turbidity of the fluid.

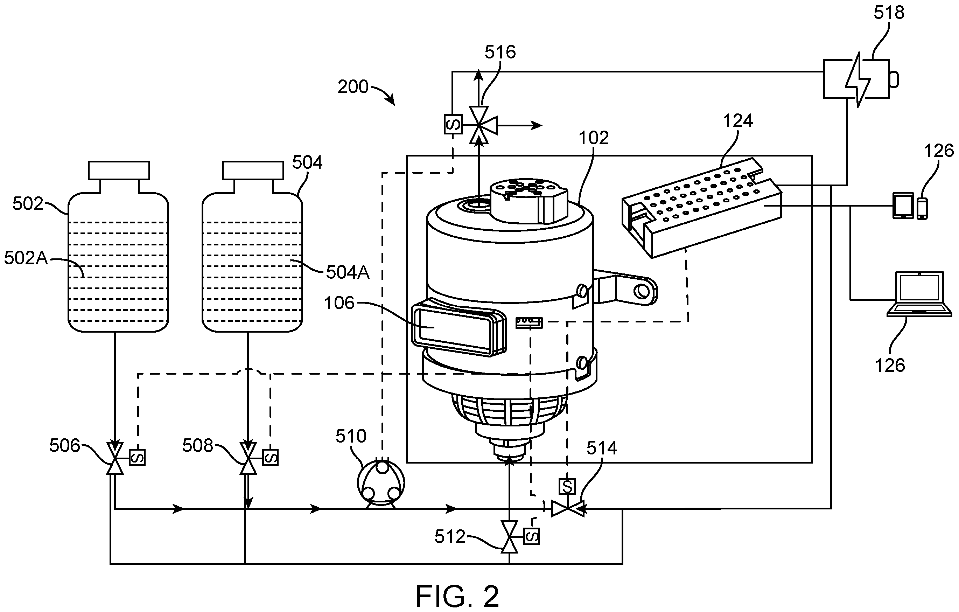

Referring now to FIG. 2, a system 200 is shown for the calibration of the turbidity meter 102, according to another example of the present disclosure. The system 200 includes a first container 502 having a first solution 502a, a second container 504 having a second solution 504a, a pump 510, a turbidity meter 102, a control unit 124, two-way valves 506, 508, 512, and 514, a three-way valve 516, one or more power sources 518, and two or more mobile units 126. The components described in the system 200 may be aspects of or examples of the similar components as those described in FIG. 1. In FIG. 2, the dotted and dashed lines represent electrical lines or connections, while the solid lines represent fluid flow lines and paths.

In contrast with the system 100 of FIG. 1, the system 200 shows an example where the control unit 124 is detached from the turbidity meter 102. The control unit 124 may be physically attached to the housing 103, as in FIG. 1, or may be external to the housing 103. The control unit 124 may be designed to be removably attached to the turbidity meter 102 via housing 103 or to be external to the turbidity meter 102. The control unit 124 may be wired or wireless connected to the turbidity meter 102 and other components of the system 200.

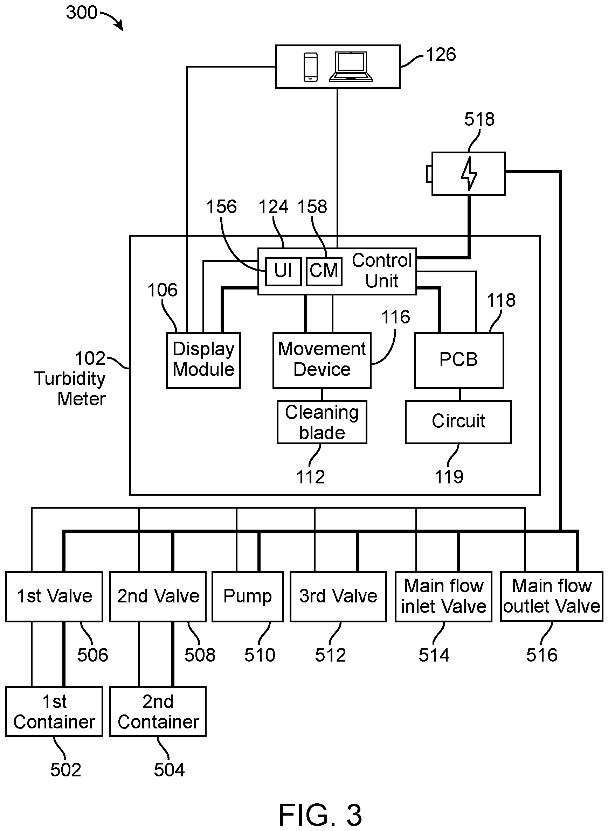

FIG. 3 schematically illustrates an example system 300 including a turbidity meter 102, according to an additional disclosed example. The turbidity meter 102 may include a control unit 124. The control unit 124 may be connected to the turbidity meter 102 through a wired connection or a wireless connection. The control unit 124 may be located within a housing of the turbidity meter 102 (such as the housing 103 of FIG. 1). In additional examples, the control unit 124 may be located outside the housing of the turbidity meter 102, while still being electrically connected to the turbidity meter 102. The control unit 124 may also be in communication with other system elements, such as the system elements shown in the system 100 of FIG. 1, either wired or wirelessly. The system 300 may further include mobile units 126, a first valve 506, a second valve 508, a third valve 512, a main flow inlet valve 514, a main flow outlet valve 516, a pump 510, a first container 502, and a second container 504, which may be examples of or include aspects of one or more of the mobile units 126, the valves 506, 508, 512, 514, and 516, the pump 510, and the containers 502 and 504 discussed with reference to FIGs. 1 and 2, respectively.

The control unit 124 may include a user interface 156 and a communication module 158. The user interface 156 may be located within the control unit 124 or outside of the control unit 124. Additionally, the user interface 156 may be wired or wirelessly coupled to the control unit 124 and located within the system 200. The user interface 156 may be in the form of a graphical user interface (GUI), command-line interface (CLI), touchscreen interface, or numeric keypad capable of providing a user input controls, navigation components, informational components, and containers.

The communication module 158 may also be located within the control unit 124 or outside of the control unit 124. The communication module 158 may be wired or wirelessly coupled to the control unit 124. The communication module 158 may be in the form of a Bluetooth Module, CAN (Controller Area Network), Universal Communication Module (UCM), or an additional wireless communication module known. The communication module 158 may enable one or more elements within the control unit 124 or the turbidity meter 102 to send and receive data through a communication protocol.

The turbidity meter 102 may also include a display module 106, a movement device 116, and a printed circuit board (PCB) 118. The movement device 116 may be physically connected to the cuvette cleaning blade 112. The PCB 118 may include a circuit 119, which may include one or more device used to determine a turbidity of a fluid sample. The control unit 124 may be electrically connected to the display module 106, the movement device 116, and the PCB 118. Additionally, the control unit 124, along with the display module 106, the movement device 116, and the PCB 118 may be connected to one or more power sources 518. Additional functions of the components of the turbidity meter 102 are described further below.

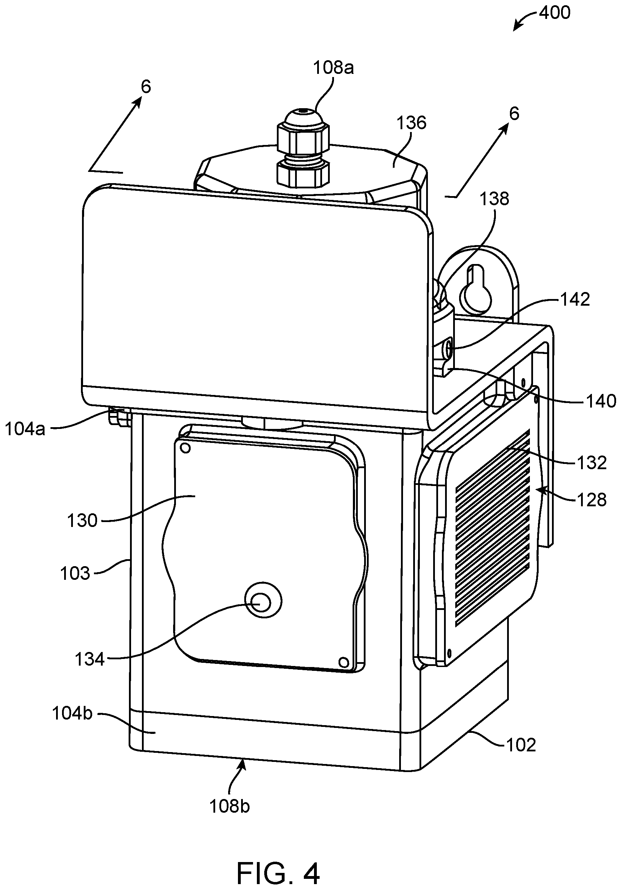

FIG. 4 is a front isometric view 400 of an example turbidity meter 102, according to a disclosed example. The turbidity meter 102 may be an example of, or may include aspects of, the turbidity meters 102 described with respect to FIGs. 1-3.

The turbidity meter 102 may include a housing 103 for accommodating one or more components. The housing 103 may include a first side 104a and a second side 104b. The housing 103 may further include a display cover 130, a control unit cover 128 that covers a control unit, such as the control unit 124 of FIGs. 1-3, an inlet 108b, and an outlet 108a. Additionally, within housing 103, the turbidity meter 102 may include additional components, such as a cuvette, a cuvette cleaning blade, a rotational shaft, a movement device, and a PCB having a circuit. In the example turbidity meter 102 shown in FIG. 4, the first side 104a may refer to a top side of the turbidity meter 102 and the second side 104b may refer to a bottom side of the turbidity meter 102.

The housing 103 of the turbidity meter 102 may include one or more panel covers, including the control unit cover 128 and the display cover 130. The control unit cover 128 and the display cover 130 may be removably coupled to the housing 103. The control unit cover 128 and the display cover 130 may be positioned about any orientation around the turbidity meter 102, including but not limited to, the first side 104a, the second side 104b, or another side of the housing 103. The control unit cover 128 may include a plurality of slots 132 for ventilation to the control unit or other internal components of the turbidity meter 102, although in other examples the control unit cover 128 may have a different design or may have no slots at all.

The display cover 130 may include one or more display LEDs capable of displaying an indication of a status of the turbidity meter 102 or an indication of a range of turbidity values of the fluid sample. For example, a display LED 134 may show green light when the turbidity value of the fluid sample is below a first turbidity level threshold (indicating low turbidity), yellow light when the turbidity value of the fluid sample is above the first turbidity level threshold but below a second turbidity level threshold (indicating medium turbidity), and red light when the turbidity value of the fluid sample is above the second turbidity level (indicating high turbidity). In other examples, other conventions, codes, and mechanisms for indicating turbidity may be used. The display LED 134 may be wired or wirelessly coupled to the control unit 124 and may output one or more signals to, and input one or more signals from, the control unit 124.

The turbidity meter 102 may also include a top cover 136 with an alignment portion 138. Additionally, the first side 104a may include an alignment ring 140 with a notch 142. The alignment ring 140 and the notch 142 may be sized and shaped to accept the top cover 136, such that the alignment portion 138 may line up with the notch 142. In examples where the turbidity meter 102 includes the top cover 136 with the alignment portion 138, the first side 104a with the alignment ring 140 may be used to access internal components of the turbidity meter 102. The top cover 136 may be assembled onto the alignment ring 140 and capable of being rotated to affix the top cover 136 to the turbidity meter 102. In some examples, the top cover 136 and its alignment system may include a pin and locking slot for assembling the top cover 136 to the turbidity meter 102. Alternatively, or additionally, the assembly elements of the top cover 136 may include attachment mechanisms including a hinge, locking mechanism, threads, and other ways known in the art.

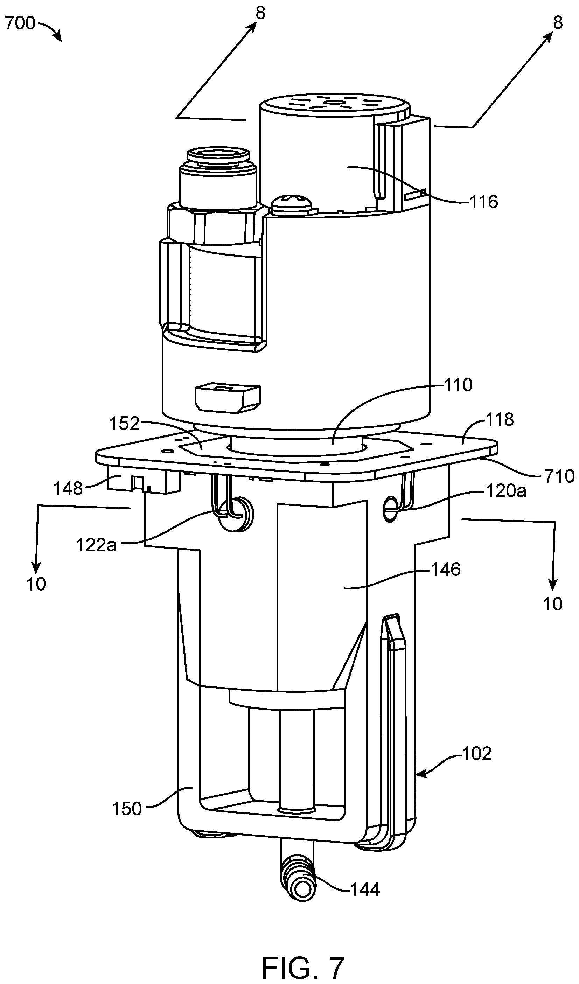

As described herein, the turbidity meter 102 may be used to measure the turbidity of a fluid. Various mechanisms are described herein to provide fluid to the turbidity meter 102. A fluid inlet 108b may be provided at the second side 104b for receiving fluid inside the turbidity meter 102. For example, the turbidity meter 102 may be fit into existing fluid flow pipelines in an inline manner to receive fluid at the fluid inlet 108b, as shown in the system 100 of FIG. 1. For example, the turbidity meter 102 may automatically receive the fluid through the existing fluid flow pipelines (as shown in further detail in FIG. 7). In some other examples, the turbidity meter 102 may act as a stand-alone apparatus or a device where the fluid may be received manually from a user via the fluid inlet 108b. As a stand-alone apparatus, a user may be able to input fluid manually in the fluid inlet 108b. For example, a user may be able to insert fluid into the turbidity meter 102 by way of a funneling device or separate fluid conduit. In additional examples, the turbidity meter 102 may be coupled to a drain, a reservoir, or fluid storage means where a user may add fluid into the turbidity meter 102.

To remove the fluid, the turbidity meter 102 may include a fluid outlet 108a at the first side 104a. The fluid outlet 108a may be provided to allow the fluid to exit the turbidity meter 102. In other examples, a user may manually remove the fluid from the turbidity meter 102 by the fluid outlet 108a, using, for example, a suction tube. In some examples, a user may remove the fluid from the turbidity meter 102 via an additional drainage port coupled to a fluid conduit system. Fluid exiting the turbidity meter 102 may be extracted from the internal elements using a pressure suction system or manual means, for example.

Further, fluid may flow through the turbidity meter 102. The flow rate of the fluid in the turbidity meter 102 may be around 250 to 350 milliliters (ml) per minute, although other flow rates may be used in other examples. The flow rate may also vary based on turbidity.

The turbidity meter 102 may determine the turbidity of a fluid contained within its cuvette. A value of the turbidity of the fluid determined by the turbidity meter 102 may be indicated via the display LED 134, may be displayed on a Liquid Crystal Display (LCD) display, or it may be displayed by other means. In some examples, the housing 103 may include a display in the form of a window, which may be located on at the display cover 130. The display may also display other information such as calibration information of the turbidity meter 102, a frequency of measurement of turbidity, previously measured turbidity values, or other information. Further, the display module 106 may also be used by a user or a technician to configure operation of the turbidity meter 102 and any other settings (such as measurement frequency, device calibration, etc.). The display module 106 may also be coupled to the control unit 124 or a mobile unit 126 located outside of the turbidity meter 102.

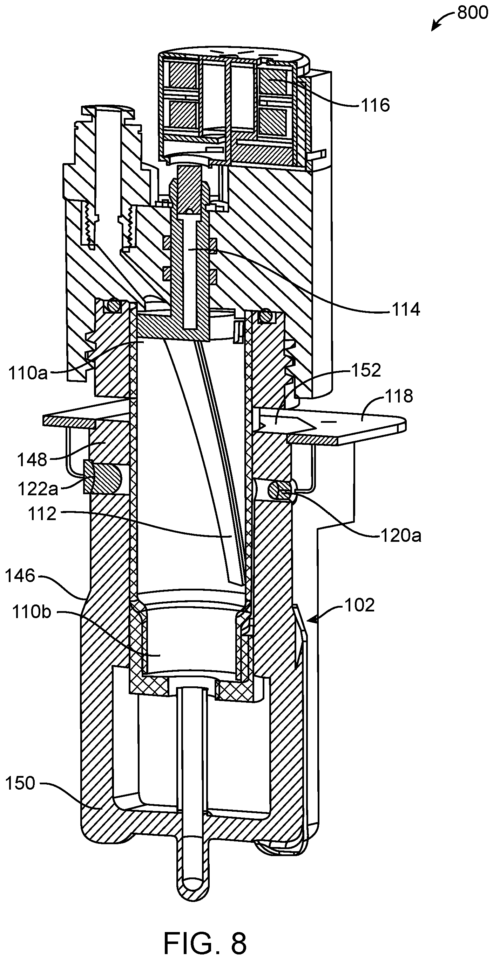

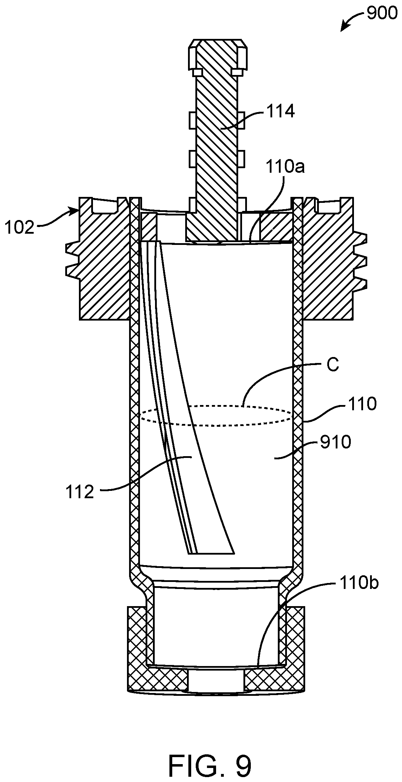

The turbidity meter 102 may communicate with a control unit 124. As shown in the examples within FIGs. 1-3, the control unit 124 may be placed outside the turbidity meter 102. In the example within FIG. 4, the turbidity meter 102 may be connected to the control unit 124 through a wired connection or a wireless connection. In other examples, the control unit 124 can also be placed anywhere inside the housing 103 of the turbidity meter 102. In this example, the control unit 124 may be placed near a movement device 116 and a cuvette cleaning blade 112 (shown below with respect to FIGS. 8 and 9). Moreover, the control unit 124 may also communicate with one or more mobile units 126 through a wired connection or a wireless connection. Thereby, the control unit 124 may transmit turbidity values determined by the turbidity meter 102 to the one or more mobile units 126 for processing or display of the turbidity values.

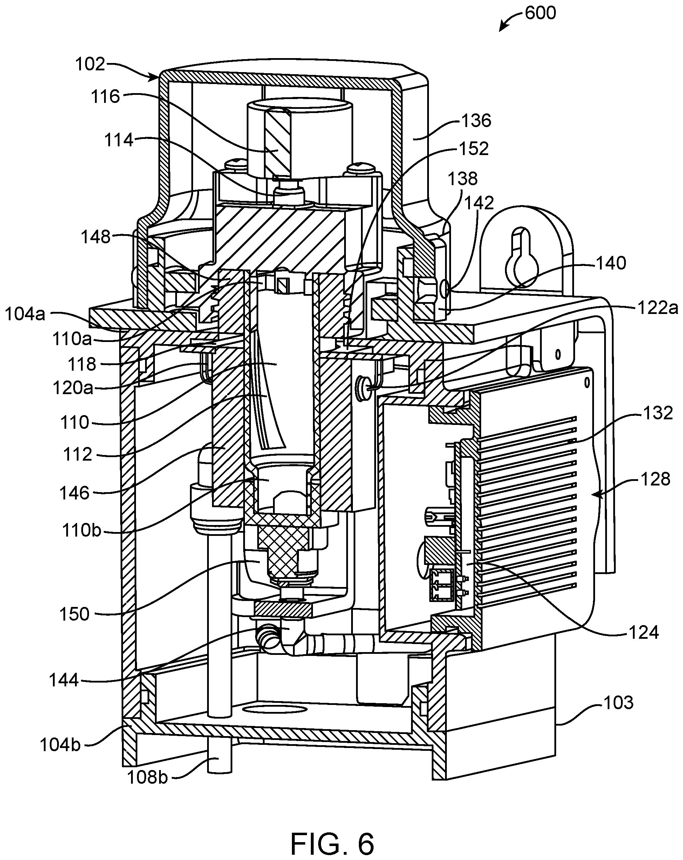

The front isometric view 400 shows a line 6-6, which will be described with respect to FIG. 6.

FIG. 5 is an exploded isometric view 500 of an example turbidity meter 102, according to a disclosed example. The turbidity meter 102 is shown in an exploded configuration in order to provide detailed viewing of some internal components of the turbidity meter 102. The turbidity meter 102 may be an example of, or may include aspects of, the turbidity meters 102 described with respect to FIGs. 1-4. Likewise, the various components of the turbidity meter 102 described herein may be examples of, or may include aspects of, similar components as those described with respect to FIGs. 1-4.

The housing 103 may include a first side 104a and a second side 104b, a control unit cover 128 with a plurality of slots 132, a display cover 130 with a display LED 134, and a top cover 136 with an alignment portion 138 and an alignment ring 140 located on the first side 104a. These components may be examples of, or include aspects of, similar components as described with respect to FIGs. 1-4. The plurality of slots 132 may be positioned vertically, horizontally, or diagonally on the control unit cover 128. Additionally, the display LED 134 may be installed on the surface of the display cover 130, in place of the display cover 130, or coupled within a recessed portion within the surface.

Turning to internal components of the turbidity meter 102, the turbidity meter 102 may include a cuvette 110 with a first end 110a and a second end 110b, a cuvette cleaning blade 112, a rotational shaft 114, a movement device 116, a PCB 118, and a control unit 124. Additionally, the housing 103 may incorporate a solenoid piping system 144 to move fluid within the turbidity meter 102. The housing 103 may further include a cuvette shroud 146 with a top portion 148 and a bottom portion 150. The cuvette shroud 146 may include an alignment surface 152 on the top portion 148. The cuvette shroud 146 may provide support for the cuvette 110.

The function of the turbidity meter 102 in communication with the PCB 118, control unit 124, cuvette 110, and cuvette cleaning blade 112 is described. Fluid may enter the turbidity meter 102 from the fluid inlet 108b. In some instances, the fluid enters the fluid inlet 108b of the turbidity meter 102 through fluid pipelines connected to the turbidity meter 102. In other examples, the fluid may be manually entered into the fluid inlet 108b of the turbidity meter 102 by a user. After the turbidity is determined by the control unit 124 or the PCB 118, the one or more LEDs 122 may begin to emit light. Further, the cuvette cleaning blade 112 may be stopped after receiving one or more signals or information from one or more dust or dirt sensors positioned in the cuvette 110. If such signals or information from the one or more dust or dirt sensors indicates that no dust, dirt, or other contaminants may be present inside the cuvette 110, the one or more dust or dirt sensors communicate with the control unit 124 to indicate one or more signals or information indicating the lack of no dust or dirt. Accordingly, the control unit 124 may output or transmit a signal to the movement device 116 to stop the rotation of the cuvette cleaning blade 112.

Alternatively, the cuvette cleaning blade 112 may be circumferentially rotated or vertically moved for a time threshold. After the expiration of the time threshold, the rotation or movement of the cuvette cleaning blade 112 may be stopped by the movement device 116. Such a threshold may be manually set up by the user or the technician via a display module 106 of the turbidity meter 102 or via a user interface of the control unit 124. Alternatively, the user or the technician may use a software application executed at the one or more mobile units 126a and 126b to remotely set up the time threshold. In some instances, the time threshold may be configured automatically by the control unit 124 based on the turbidity level of the fluid determined by the turbidity meter 102. In any of these scenarios, the control unit 124 may communicate the time threshold to the movement device 116, either along with the one or more signals being sent for rotation or the control unit 124 may send the time threshold as an additional signal to the movement device 116. As an example, the time threshold may be 10 minutes for which the cuvette cleaning blade 112 may be rotated. After the expiration of 10 minutes, the rotation of the cuvette cleaning blade 112 may be stopped by the movement device 116. In other examples, other time thresholds may be used. In some cases, the time threshold may be based at least in part on a turbidity level of the fluid.

Furthermore, the cuvette cleaning blade 112 may be rotated by the movement device 116 based on a threshold number of clockwise rotations or a threshold number of counterclockwise rotations. These threshold numbers of clockwise rotations or counterclockwise rotations may be manually set up by the user or the technician via the display module 106 of the turbidity meter 102 or via a user interface of the control unit 124. Alternatively, the user or the technician may use the software application executed at the one or more mobile units 126a and 126b to remotely set up the threshold number of clockwise rotations or the threshold number of counterclockwise rotations. In some instances, the threshold number of clockwise rotations or the threshold number of counterclockwise rotations may be configured automatically by the control unit 124 based on the turbidity level of the fluid determined by the turbidity meter 102. In any of these scenarios, the control unit 124 may communicate the threshold number of clockwise rotations and the threshold number of counterclockwise rotations to the movement device 116 either along with one or more signals being sent for rotation or via additional signaling to the movement device 116. On completion of these clockwise rotations or counterclockwise rotations, the movement device 116 may stop rotating the cuvette cleaning blade 112.

As an example, the threshold numbers of clockwise and counterclockwise rotations may be five. Additionally, these clockwise and counterclockwise rotations may be performed alternately or consecutively by the movement device 116. Thus, using the example of the threshold numbers of clockwise and counterclockwise rotations being five, all of the five clockwise rotations may be first performed and then all of the five counterclockwise rotations are subsequently performed. As another example, the movement device 116 may first perform a single clockwise rotation, then perform a single counterclockwise rotation, and the movement device 116 may repeat this pattern until all of the five clockwise rotations and all of the five counterclockwise rotations are performed.

FIG. 6 is a cross-sectional view 600 along line 6-6 of the example turbidity meter 102 of FIG. 4, according to a disclosed example. The turbidity meter 102 may be an example of, or may include aspects of, the turbidity meters 102 described with respect to FIGs. 1-5. Likewise, the various components of the turbidity meter 102 described herein may be examples of, or may include aspects of, similar components as those described with respect to FIGs. 1-5.

The turbidity meter 102 may include, but is not limited to, a cuvette 110, a cuvette cleaning blade 112 inside the cuvette 110, a rotational shaft 114 connected to the cuvette cleaning blade 112, a movement device 116, a PCB 118, and a cuvette shroud 146. The cuvette 110 may have a first end 110a and a second end 110b. The first end 110a of the cuvette 110 may be connected to or in contact with the first side 104a of the turbidity meter 102. Similarly, the second end 110b of the cuvette 110 may be connected to or in contact with the second side 104b of the turbidity meter 102.

The movement device 116 may be coupled to the rotational shaft 114. The rotational shaft 114 may be in the form of a drive shaft, crankshaft, counter shaft, axle shaft or the like. In some instances, the movement device 116 corresponds to a direct current (DC) movement device, a stepper movement device, a servo movement device, an actuator, etc. The rotational shaft 114 of the movement device 116 may be provided in the form of a drive shaft or driving axle capable of rotating the cuvette cleaning blade 112. The movement device 116 may turn the rotational shaft 114 in order to rotate the cuvette cleaning blade 112 around the cuvette 110. In other examples, the movement device 116 may move the rotational shaft 114 longitudinally (e.g., moving the rotational shaft 114 in or out from the movement device 116 to move the cuvette cleaning blade 112 up or down along the internal surface of the cuvette 110. In other examples, the rotational shaft 114 may be attached to the cuvette 110, and the movement device 116 may be designed to move the cuvette while the cuvette cleaning blade 112 remains in place.

Fluid enters the turbidity meter 102 from the fluid inlet 108b. In some instances, the fluid enters the fluid inlet 108b of the turbidity meter 102 through one or more fluid pipelines connected to the turbidity meter 102. In other examples, the fluid may be manually entered into the fluid inlet 108b of the turbidity meter 102 by an operator. In additional examples shown, fluid may enter the cuvette 110 by way of the solenoid piping system 144 and fluid inlet 108b.

From the fluid inlet 108b and solenoid piping system 144, the fluid may enter the cuvette 110 through the second end 110b of the cuvette 110. When the fluid is inside the cuvette 110, the turbidity of the fluid may be determined using a circuit on the PCB 118, which may include one or more LEDs 122a and one or more photodiodes 120a. An example process to determine the turbidity of the fluid will be explained in greater detail below in conjunction with the PCB 118 and its components.

The fluid entering the cuvette 110 may be contaminated with dirt, dust, or other small particles. Once the turbidity of the fluid is determined, the fluid may exit the cuvette 110 through the first end 110a of the cuvette 110 so a new fluid sample may be tested. However, some of the contaminants from the previous fluid sample may remain stuck inside the cuvette 110, even after the fluid exits the cuvette 110. When the turbidity determination procedure is repeatedly performed, dirt, dust, and other small particles may accumulate around or inside the cuvette 110, which could result in incorrect turbidity measurements. Incorrect turbidity measurements may result from changes in the amount of light detected at the one or more photodiodes 120a due to absorption or reflection of light off the dirt, dust, or other small particles accumulated on the cuvette 110 internal surface. As used herein, the "internal surface" of the cuvette 110 refers to a surface of the cuvette 110 in which the fluid may be accumulated, stored, or passed through for determining the turbidity of the fluid. When excess particles adhere to the cuvette 110, the light from the one or more LEDs 122 may not be captured by the one or more photodiodes 120.

Additionally, when the cuvette 110 begins to accumulate excess particles, the turbidity meter 102 may clean the cuvette 110, resulting in improved turbidity measurements. To internally clean the cuvette 110, the turbidity meter 102 uses the cuvette cleaning blade 112 to scrape accumulated particles off the internal surface of the cuvette 110. In some examples, one end of the cuvette cleaning blade 112 may be positioned near the first end 110a of the cuvette 110, while the other end of the cuvette cleaning blade 112 may be positioned near the second end 110b of the cuvette 110. The cuvette cleaning blade 112 may be connected to the movement device 116 through the rotational shaft 114 near the first side 104a of the turbidity meter 102.

Moreover, the control unit 124 or the circuit on the PCB 118 may be used to detect one or more events related to the turbidity meter 102. Examples of such events may include determining when the turbidity meter checks the turbidity of the fluid, determining when a number of rotations of the cuvette cleaning blade 112 is completed, determining a number of times the turbidity meter 102 determines the turbidity of the fluid, and the like. The control unit 124 may communicate with the cuvette cleaning blade 112 and may sense information such as a rotation force on the cuvette cleaning blade 112 (via the rotational shaft 114) or detect accumulated particles on the internal surface of the cuvette 110.

In addition, the control unit 124 or the circuit on the PCB 118 may interact with the movement device 116 using a wired or wireless connection. The control unit 124 or the circuit on the PCB 118 may communicate with the movement device 116 and transmit one or more signals to the movement device 116 to rotate or move the rotational shaft 114, which causes the cuvette cleaning blade 112 to rotate or move. In some instances, the cuvette cleaning blade 112 may be rotated in response to the turbidity meter 102 checking the turbidity of the fluid, to ensure that the cuvette is cleaned after each test. In other examples, the turbidity meter 102 may be cleaned whenever fluid samples may have high contamination. For example, the cuvette cleaning blade 112 may be actuated whenever the turbidity meter 102 determines that the turbidity level of the fluid is equal to or above a threshold turbidity.

In additional aspects, the threshold turbidity may be implemented by the control unit 124 or the user via a mobile unit 126 or a user interface associated with the control unit 124. Any of the thresholds associated with the turbidity level of a fluid may be programmed into the control unit 124 of the turbidity meter 102. Alternatively, some of the thresholds associated with turbidity levels may be based on hardware limitations associated with the turbidity meter 102. In some aspects, the thresholds may be customizable. For example, the turbidity meter 102 may include a user interface, such as the user interface 156, which may enable the one or more thresholds to be selected or otherwise set. The thresholds may also be programmable through, for example, a plurality of mobile units 126. In additional aspects, the user may input, for example, through a user interface 156, a desired turbidity level to initiate cleaning cycles. In other examples, the control unit 124 may automatically set one or more thresholds or other cleaning cycle specifications for the turbidity meter 102. In still other alternative aspects, the control unit 124 may detect a turbidity level and automatically adjust the thresholds or other parameters based on the current turbidity measurements. In this manner, based on the particular turbidity level, the control unit 124 or the user may select different threshold turbidity levels. Additionally, the control unit 124 may also define and use parameters related to a cleaning threshold, a timing threshold, a rotational threshold, a turbidity threshold, or a limiting threshold.

For example, the control unit 124 may cause the cuvette cleaning blade 112 to be rotated or moved when the turbidity meter 102 determines that the turbidity of the fluid is above a pre-determined turbidity level. For example, when the fluid has a high turbidity (which may relate to the fluid containing more dirt, dust, or other particles), the cuvette 110 may be more likely to become dirty. By actuating the cuvette cleaning blade 112 after a high turbidity fluid has entered the cuvette, the techniques described herein may enable the cuvette 110 to be cleaned in response to receiving the high turbidity fluid.

FIG. 7 is a front isometric view 700 of example internal components of the turbidity meter 102, according to a disclosed example. The front isometric view 700 shows an assembled configuration of aspects of the turbidity meter 102, including an aspect of a cuvette 110, a cuvette shroud 146, and a PCB 118. Portions of a movement device 116, a top portion 148 of the cuvette shroud 146, an alignment surface 152, a bottom portion 150, and solenoid piping system 144 are also shown. The turbidity meter 102 may be an example of, or may include aspects of, the turbidity meters 102 described with respect to FIGs. 1-6. Likewise, the various components of the turbidity meter 102 described herein may be examples of, or may include one or more aspects of, similar components as those described with respect to FIGs. 1-6.

A circuit 710 may be mounted on the PCB 118 and includes a first photodiode 120a, a second photodiode 120b, a first LED 122a, and a second LED 122b. The PCB 118 may have a cutout that is shaped to fit around or on the alignment surface 152 of the cuvette shroud 146. In some examples, the PCB 118 may have an octagon or a hexagon shape to match the octagon or hexagon shape of the cuvette shroud 146. In some examples, the PCB 118 includes a circular cutout shape. In other examples, other shapes of the PCB 118 and the cuvette shroud 146 may be used.

The front isometric view 700 shows a line 8-8 and a line 10-10, which will be described with respect to FIGs. 8 and 9, and 10, respectively.

FIG. 8 is a cross-sectional view 800 along line 8-8 of the example turbidity meter 102 of FIG. 7, according to a disclosed example. A section view of a cuvette 110, a cuvette shroud 146, and a PCB 118 is shown in cross-sectional view 800. The turbidity meter 102 may be an example of, or may include aspects of, the turbidity meters 102 described with respect to FIGs. 1-7. Likewise, the various components of the turbidity meter 102 described herein may be examples of, or may include one or more aspects of, similar components as those described with respect to FIGs. 1-7.

Here, the cuvette 110 includes a first end 110a and a second end 110b, a cuvette cleaning blade 112, a rotational shaft 114, and a movement device 116 are shown in an example configuration. Furthermore, the cuvette cleaning blade 112 may be connected to the rotational shaft 114 near the first end 110a of the cuvette 110. Additionally, the movement device 116 may be placed above the rotational shaft 114 to control the movement of the cuvette cleaning blade 112. The first photodiode 120a and the first LED 122a are illustrated positioned up against the cuvette 110. At least the portions of the cuvette 110 near the first photodiode 120a and the first LED 122a (as well as any additional photodiodes and LEDs) may be transparent, allowing light from the first LED 122a to pass through a portion of the cuvette 110 to reach the first photodiode 120a.

FIG. 9 is another cross-sectional view 900 along line 8-8 of the example turbidity meter of FIG. 7, according to a disclosed example. The cross-sectional view 900 illustrates additional details for a cuvette 110 and a cuvette cleaning blade 112. The turbidity meter 102 may be an example of, or may include aspects of, the turbidity meters 102 described with respect to FIGs. 1-8. Likewise, the various components of the turbidity meter 102 described herein may be examples of, or may include one or more aspects of, similar components as those described with respect to FIGs. 1-8.

As shown in FIG. 9, the cuvette cleaning blade 112 may be substantially angled within the cuvette 110. In some forms, the cuvette cleaning blade 112 may be sized and shaped to match an internal surface 910 of the cuvette 110. The cuvette cleaning blade 112 may be shaped to touch the internal surface 910, which may enable it to scrape along the internal surface 910 and remove any particles stuck to the internal surface 910. The cuvette cleaning blade 112 may be formed of silicone, a rubber material, or another type of material. The cuvette cleaning blade 112 may be made from a flexible membrane where the flexible membrane touches the internal surface 910 of the cuvette 110. In additional examples, the cuvette cleaning blade 112 may be formed of two or more materials, one being a rigid material mirroring the shape of the internal surface 910 of the cuvette 110 and another material being a membrane having a flexible material coupled to the rigid portion. In other examples, the flexible material may mirror the shape of the internal surface 910 while the rigid material couples the cuvette cleaning blade 112 to the rotational shaft 114.

The movement device 116 may be placed above the rotational shaft 114 to control the movement of the cuvette cleaning blade 112. As depicted, the cuvette 110 has an internal circumference C for the internal surface of the cuvette 110. In some examples, the cuvette cleaning blade 112 may be circumferentially rotated across the internal circumference C. That is, the cuvette cleaning blade 112 may be circumferentially shaped to mirror the circumference C of the internal surface 910. In other examples, the cuvette cleaning blade 112 can be flat, straight, helically shaped, cylindrical, or any other possible shape.

Additionally, the cuvette 110 may be made from a transparent material such that fluid within the cuvette 110 may be visible through cuvette 110.

In other examples, the cuvette cleaning blade 112 may be rotated about the internal surface 910 when fluid resides within the cuvette 110. In this example, particles may be removed from the internal surface 910 and flushed when the fluid is removed from the cuvette 110.

The control unit may apply a cleaning operation to the turbidity meter 102 that is capable of flushing fluid through the cuvette 110 to assist in removing particles from the cuvette 110. The cleaning cycle may also clean the cuvette cleaning blade 112. The cuvette cleaning blade 112 may also be rotated one or more times during or soon after a fluid sample is taken, to clean the internal surface 910 before particles adhere to it.

Likewise, the cuvette 110 and cuvette cleaning blade 112 may be cleaned using chemicals. Chemicals may be flushed through the cuvette 110 or the entire turbidity meter 102. In other aspects, chemicals may be added to the first solution 502a or the second solution 504a as shown in the system 100 of FIG. 1. The first solution 502a or second solution 504a may consist of a chemical solution or a combination of a chemical and calibration solution.

Furthermore, the placement of the cuvette cleaning blade 112 inside the cuvette 110 in FIG. 9 is illustrated according to an additional aspect. Within FIG. 9, the cuvette cleaning blade 112 may be at a rest position when the cuvette cleaning blade 112 may not be circumferentially rotating or vertically moving inside the cuvette 110. At the rest position, an end tip of the cuvette cleaning blade 112 may touch an internal surface of the cuvette 110.

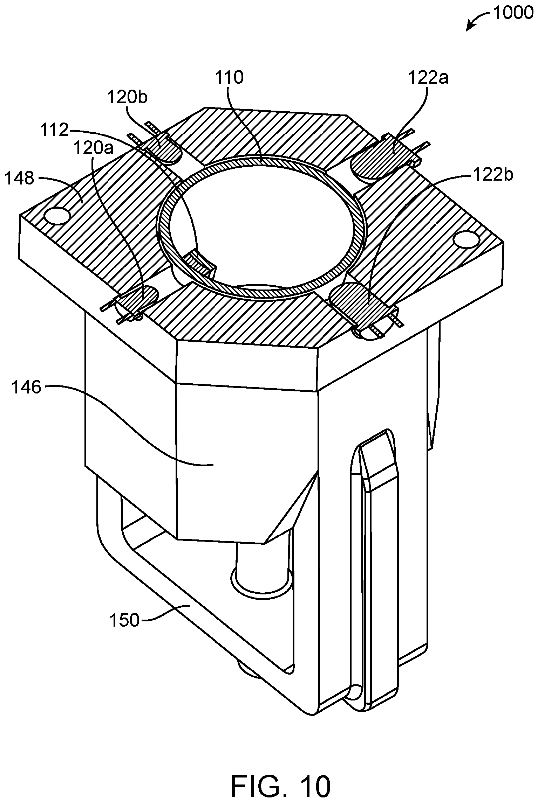

FIG. 10 is a cross-sectional view 1000 along line 10-10 of the example turbidity meter 102 of FIG. 7, according to a disclosed example. The cross-sectional view 1000 illustrates additional details of a PCB 118, a cuvette shroud 146, and a bottom portion 150. The turbidity meter 102 may be an example of, or may include aspects of, the turbidity meters 102 described with respect to FIGs. 1-9. Likewise, the various components of the turbidity meter 102 described herein may be examples of, or may include one or more aspects of, similar components as those described with respect to FIGs. 1-9.

The PCB 118 includes two photodiodes 120a and 120b and two LEDs 122a and 122b. The one or more photodiodes 120a and 120b and the one or more LEDs 122a and 122b are positioned 180 degrees across from to each other. In particular, the first photodiode 120a may be positioned 180 from the second LED 122b, and the second photodiode 120b may be positioned 180 degrees from the first LED 122a. In other examples, each of the one or more photodiodes 120a and 120b and the one or more LEDs 122a and 122b are positioned at a 90-degree angle from a center point of the PCB 118.

To determine the turbidity level of the fluid inside the cuvette 110, light from the LEDs 122a and 122b may be emitted towards the fluid. The photodiodes 120a and 120b may receive some of the emitted light, which may be reflected or passed through, based on the relative positions of the photodiodes 120a and 120b with respect to the LEDs 122a and 122b. Based on the scattering and reflection of the light from the suspended particles present in the fluid and the passing of the rest of the light through the fluid, the turbidity level of the fluid inside the cuvette 110 may be determined from the light received at the photodiodes 120a and 120b. Although only two LEDs 122a and 122b and two photodiodes 120a and 120b are shown in the example here, it is understood for a person skilled in the art that any number of LEDs and any number of photodiodes may be placed on the PCB 118 of the turbidity meter 102.

Additionally, the PCB 118 may be sized and shaped to align with the cuvette shroud 146 via an alignment surface. The alignment surface may be provided in various forms to accommodate the PCB 118. It should be known that the alignment portions located within the PCB 118 may be provided in various forms to accommodate an alignment surface, such as the alignment surface 152. As shown in FIG. 10, the PCB 118 has a circular shape to accommodate the alignment surface.

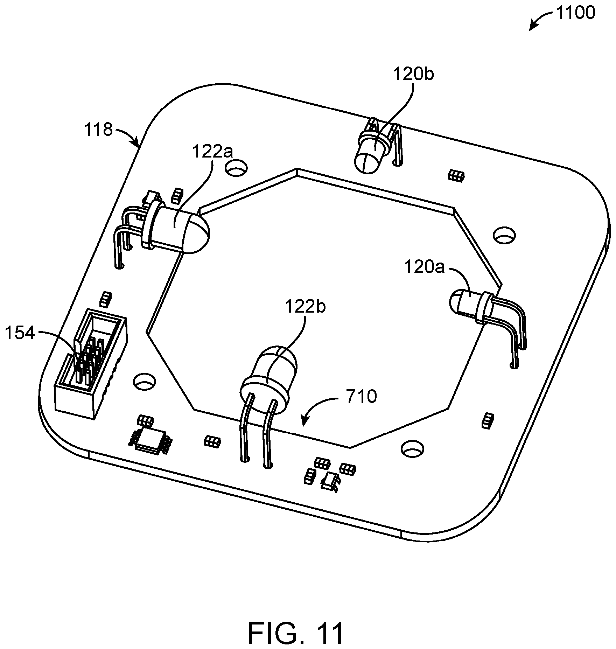

FIG. 11 is a view 1100 of an example PCB 118 of a turbidity meter, according to a disclosed example. The PCB 118 may be an example of, or may include aspects of, the printed circuit boards 118 described with respect to FIGs. 1-10. Likewise, the various components of the printed circuit boards 118 described herein may be examples of, or may include one or more aspects of, similar components as those described with respect to FIGs. 1-10.

The PCB 118 may include two photodiodes 120a and 120b and two LEDs 122a and 122b. The PCB 118 also includes an electrical connector 154. The electrical connector 154 may be located on the top surface or bottom surface of the PCB 118. The electrical connector 154 may be designed to connect the PCB 118 to additional elements within the turbidity meter 102 or external to the turbidity meter 102. In other examples, the PCB 118 may include additional electrical connectors 154, or other examples of the electrical connector 154. The electrical connector 154, the two photodiodes 120a and 120b, and the two LEDs 122a and 122b may form a circuit 710.

The PCB 118 may be sized and shaped to align with the cuvette shroud 146. As shown in the view 1100, the PCB 118 has an octagon shape. The octagon shape may fit an octagon alignment surface of a cuvette shroud 146. The octagon shape may provide for easy alignment of the PCB 118 with the cuvette shroud 146 and the cuvette 110. The octagon shape may also enable the PCB 118 to be held in place better than other designs, such as a round design. For example, the octagon shape may reduce any slippage of the PCB 118. As described herein, the alignment surface 152 may be provided in various forms to accommodate the PCB 118. Likewise, the PCB 118 may be provided in various forms to accommodate the shape of the alignment surface 152. In additional examples, the PCB 118 may have a square, pentagon, hexagon, or other shape, to accommodate the alignment surface 152. In other examples, the alignment surface 152 may include an alignment ledge mirroring the edge of the PCB 118.

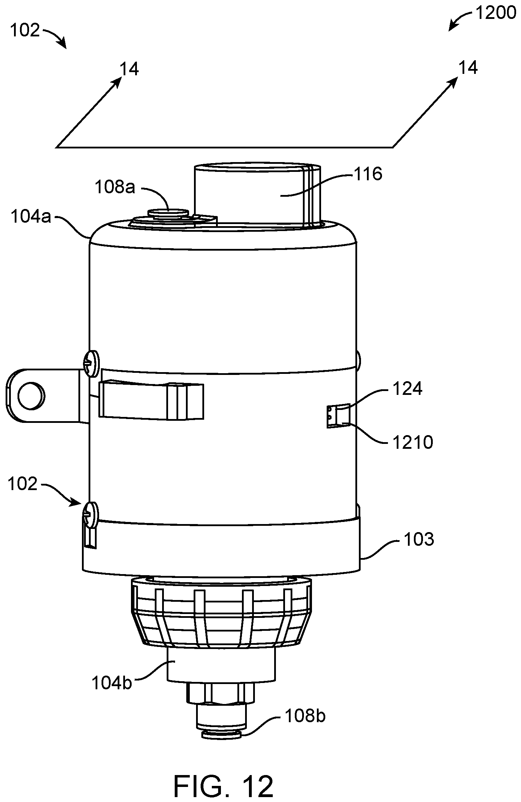

FIG. 12 is a front isometric view 1200 of an example turbidity meter 102, according to a disclosed example. The front isometric view 1200 illustrates an alternative design of the turbidity meter 102. The turbidity meter 102 may be an example of, or may include aspects of, the turbidity meters 102 described with respect to FIGs. 1-10. Likewise, the various components of the turbidity meter 102 described herein may be examples of, or may include one or more aspects of, similar components as those described with respect to FIGs. 1-11.

The turbidity meter 102 may have a housing 103 for accommodating one or more components. The housing 103 may include a first side 104a and a second side 104b, an inlet 108b, and an outlet 108a. Additionally within housing 103, the turbidity meter 102 may include a movement device 116. The housing 103 may include a port 1210 for an electrical connection to a control unit 124. As seen in the front isometric view 1200, the turbidity meter 102 may have a variety of different designs.

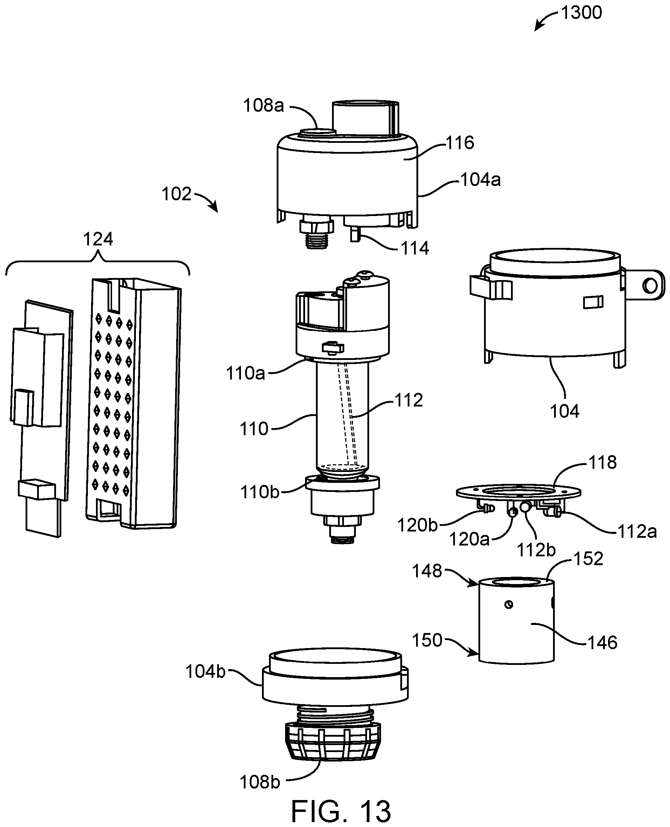

FIG. 13 is an exploded isometric view 1300 of the example turbidity meter 102 of FIG. 12, according to a disclosed example. The turbidity meter 102 may be an example of, or may include aspects of, the turbidity meters 102 described with respect to FIGs. 1-10 and 12. Likewise, the various components of the turbidity meter 102 described herein may be examples of, or may include one or more aspects of, similar components as those described with respect to FIGs. 1-12.

The exploded isometric view 1300 illustrates one or more elements of the turbidity meter 102 for detailed viewing. The turbidity meter 102 may include a housing 103, which may include a first side 104a and a second side 104b. The turbidity meter 102 may further include a control unit 124. The housing 103 may further include a cuvette shroud 146 to support or enclose the cuvette 110 of the turbidity meter 102. The internal components of the turbidity meter 102 may include a cuvette 110 with a first end 110a and a second end 110b, a cuvette cleaning blade 112, a rotational shaft 114, a movement device 116, a PCB 118, and a control unit 124. The housing 103 may include a cuvette shroud 146 to enclose the cuvette 110 of the turbidity meter 102. Within FIG 13, the control unit 124 may be positioned on the exterior surface of the housing 103 where the control unit 124 may include its own protective housing. In this aspect, the turbidity meter 102 may also include a fluid inlet 108b and fluid outlet 108a in line with the cuvette 110.

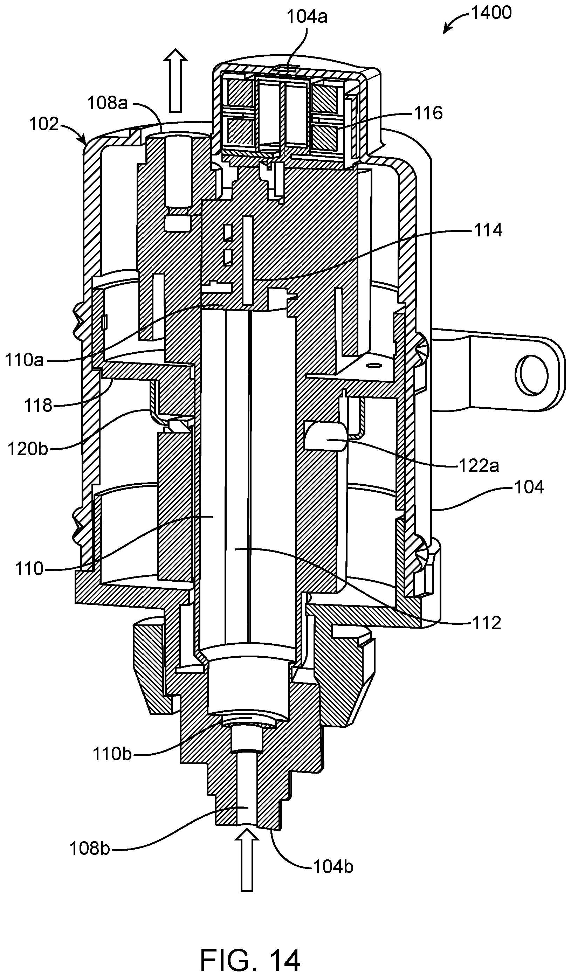

FIG. 14 is a cross-sectional view 1400 along line 14-14 of the example turbidity meter of FIG. 12, according to a disclosed example. The turbidity meter 102 may be an example of, or may include aspects of, the turbidity meters 102 described with respect to FIGs. 1-10, 12, and 13. Likewise, the various components of the turbidity meter 102 described herein may be examples of, or may include one or more aspects of, similar components as those described with respect to FIGs. 1-13.

The cross-sectional view 1400 of the turbidity meter 102 may include a cuvette 110, a cuvette cleaning blade 112 inside the cuvette 110, a rotational shaft 114 connected to the cuvette cleaning blade 112, a movement device 116 connected to the rotational shaft 114, a PCB 118, and a cuvette shroud 146. As can be seen, the cuvette 110 has a first end 110a and a second end 110b. The first end 110a of the cuvette 110 may be connected with the first side 104a of the turbidity meter 102. Similarly, the second end 110b of the cuvette 110 may be proximate to the second side 104b of the turbidity meter 102. Within FIG. 14, the cuvette cleaning blade 112 may be substantially parallel to the cuvette 110. The cuvette cleaning blade 112 may be directly coupled to the movement device 116 and be sizes and shaped to enable it to be rotated around the internal surface of the cuvette 110 in an in-line manner.

As described herein, fluid may enter the turbidity meter 102 from the fluid inlet 108b. In some instances, the fluid enters the fluid inlet 108b of the turbidity meter 102 through the fluid pipelines connected to the turbidity meter 102. In other examples, the fluid may be manually entered into the fluid inlet 108b of the turbidity meter 102 by the user using a pumping system or an external container. The fluid may exit the turbidity meter 102 from the fluid outlet 108a. In other examples, fluid may enter the turbidity meter 102 from the fluid outlet 108a and exit the turbidity meter 102 from the fluid inlet 108b.

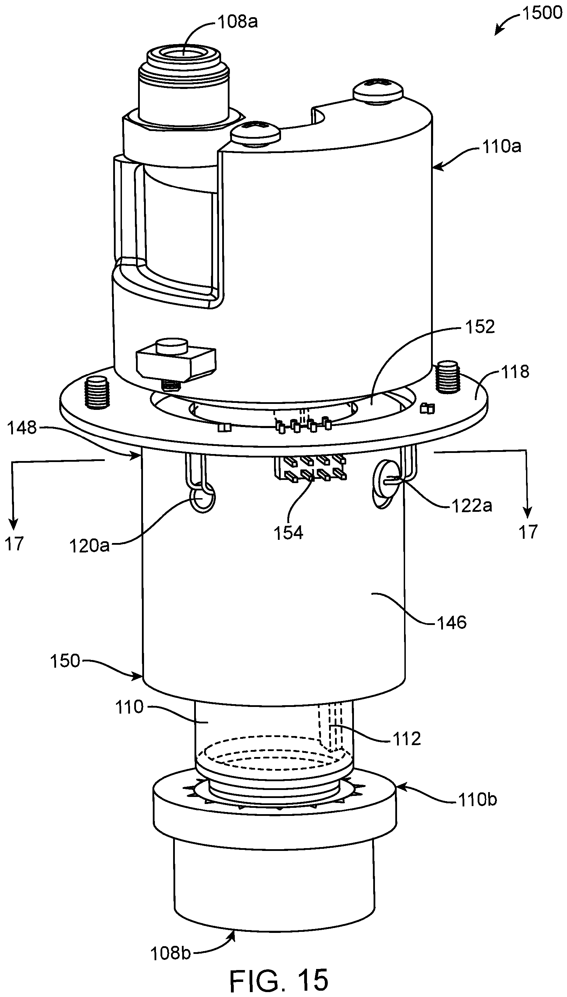

FIG. 15 is a front isometric view 1500 of internal components of the example turbidity meter 102 of FIG. 12, according to a disclosed example. The turbidity meter 102 may be an example of, or may include aspects of, the turbidity meters 102 described with respect to FIGs. 1-10 and 12-14. Likewise, the various components of the turbidity meter 102 described herein may be examples of, or may include one or more aspects of, similar components as those described with respect to FIGs. 1-14.

In the front isometric view 1500, the turbidity meter 102 may include a cuvette 110 having a first end 110a and a second end 110b, a cuvette cleaning blade 112, a rotational shaft 114, and movement device 116. Within the example illustrated in FIG. 15, the cuvette shroud 146 may be substantially circular, and may enclose the cuvette 110. Additionally, the second end 110b of the cuvette 110 may be seen protruding from base of a cuvette shroud 146. Here, the cuvette 110 may be made from a transparent material where the fluid the fluid may be seen at the base of the cuvette shroud 146.

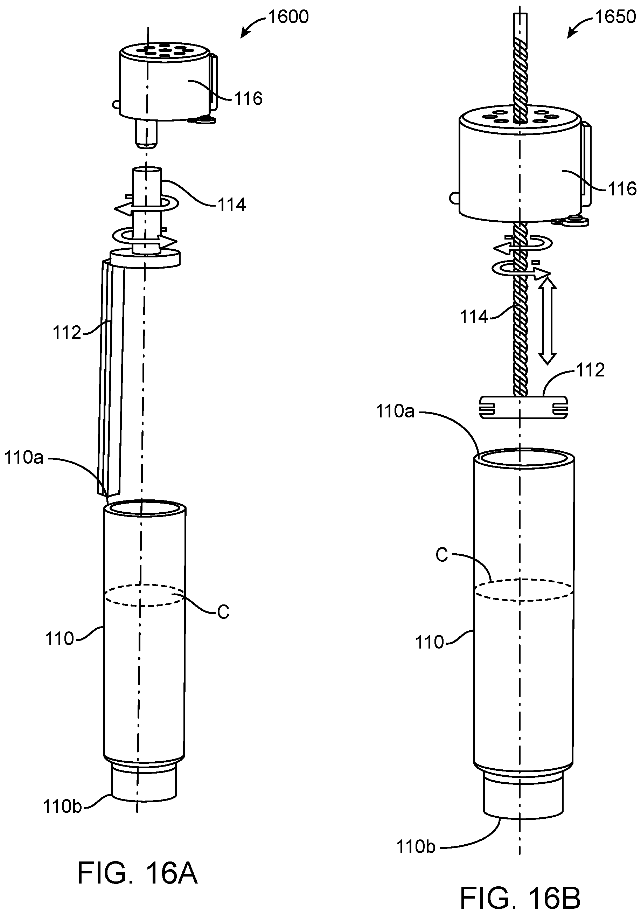

FIG. 16A is a front isometric view 1600 of example internal components of a turbidity meter 102, according to a disclosed example. The turbidity meter 102 may be an example of, or may include aspects of, the turbidity meters 102 described with respect to FIGs. 1-10 and 12-15. Likewise, the various components of the turbidity meter 102 described herein may be examples of, or may include one or more aspects of, similar components as those described with respect to FIGs. 1-15.

The front isometric view 1600 illustrates a different example cuvette cleaning blade 112 inside a cuvette 110. For example, the cuvette cleaning blade 112 may be linearly shaped. The movement device 116 may be placed above the rotational shaft 114 to control the movement of the cuvette cleaning blade 112. As depicted, the cuvette 110 has an internal circumference C for the internal surface of the cuvette 110. In some examples, the cuvette cleaning blade 112 may be circumferentially rotated on the internal circumference C. In this example, the cuvette cleaning blade 112 may rotate on its axis around the internal circumference C of the cuvette 110 as the movement device 116 spins. At the same time, the cuvette cleaning blade 112 may move vertically upward and downward inside the cuvette 110.

FIG. 16B is a front isometric view 1650 of the example internal components of a turbidity meter 102, according to a disclosed example. The turbidity meter 102 may be an example of, or may include aspects of, the turbidity meters 102 described with respect to FIGs. 1-10 and 12-15. Likewise, the various components of the turbidity meter 102 described herein may be examples of, or may include one or more aspects of, similar components as those described with respect to FIGs. 1-15.

As can be seen in the front isometric view 1650, the cuvette cleaning blade 112 may be helically shaped. The helical shape may provide different contact points for cleaning the interior surface of the cuvette 110. However, the cuvette cleaning blade 112 can also be flat, straight, cylindrical, or any other possible shape. As can be seen in the front isometric view 1650, the cuvette cleaning blade 112 may be disc shaped.

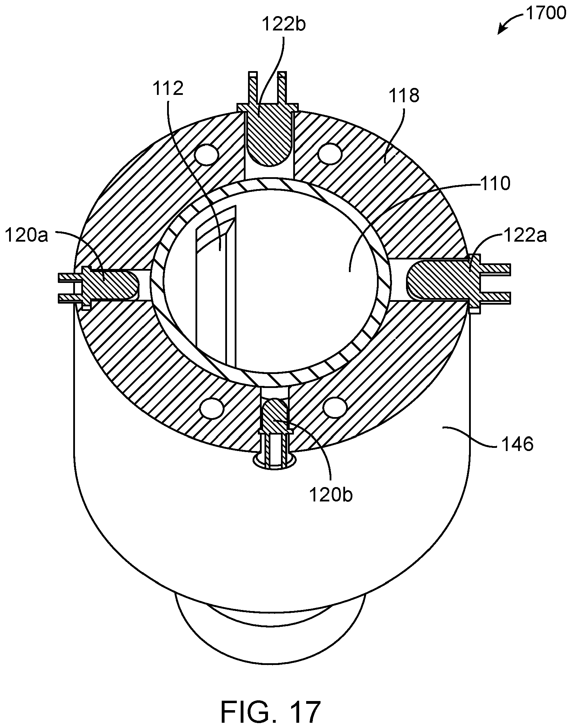

FIG. 17 is a cross-sectional view 1700 along line 17-17 of the disclosed example turbidity meter 102 of FIG. 12, according to a disclosed example. The turbidity meter 102 may be an example of, or may include aspects of, the turbidity meters 102 described with respect to FIGs. 1-10 and 12-16. Likewise, the various components of the turbidity meter 102 described herein may be examples of, or may include one or more aspects of, similar components as those described with respect to FIGs. 1-16.

The cross-sectional view 1700 shows a PCB 118 that includes one or more photodiodes 120a and 120b and one or more LEDs 122a and 122b. The one or more photodiodes 120a and 120b may include a first photodiode 120a and a second photodiode 120b. Further, the one or more LEDs 122a and 122b comprise a first LED 122a and a second LED 122b. The one or more photodiodes 120a and 120b are positioned 180 degrees from the one or more LEDs 122a and 122b on the PCB 118. The PCB 118 may include a circular cutout.

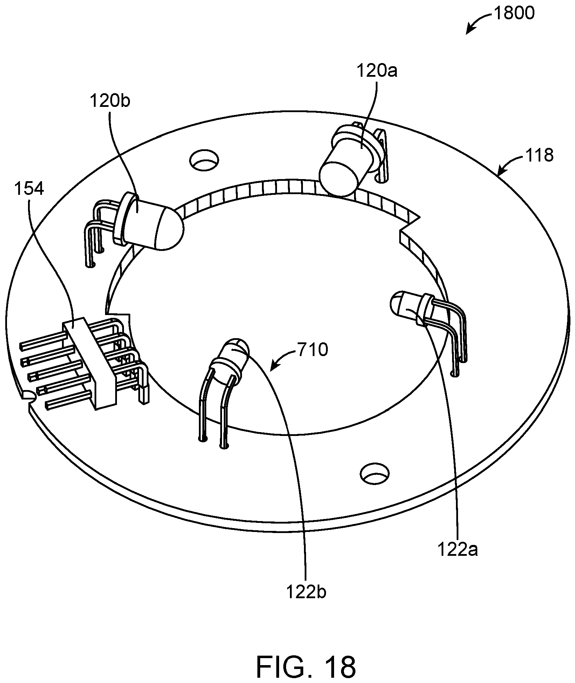

FIG. 18 is a view 1800 of another example PCB 118 of a turbidity meter, according to a disclosed example. The PCB 118 may be an example of, or may include aspects of, the printed circuit boards 118 described with respect to FIGs. 1-17. Likewise, the various components of the printed circuit boards 118 described herein may be examples of, or may include one or more aspects of, similar components as those described with respect to FIGs. 1-17.

The PCB 118 may include two photodiodes 120a and 120b, two LEDs 122a and 122b, and an electrical connector 154, which form a circuit 710. As can be seen in view 1800, the PCB 118 has a circular cutout. That is, the PCB 118 may be substantially circular to surround the cuvette 110. The circular shape may fit a circular alignment surface of a cuvette shroud 146. The octagon shape may provide for easy alignment of the PCB 118 with the cuvette shroud 146 and the cuvette 110. The circular shape may enable the PCB 118 to be rotated around the cuvette 110 more easily than other designs, such as an octagon or hexagon design. In some examples, the PCB 118 may be used with the cuvette 110 without a cuvette shroud 146 or an alignment surface 152.

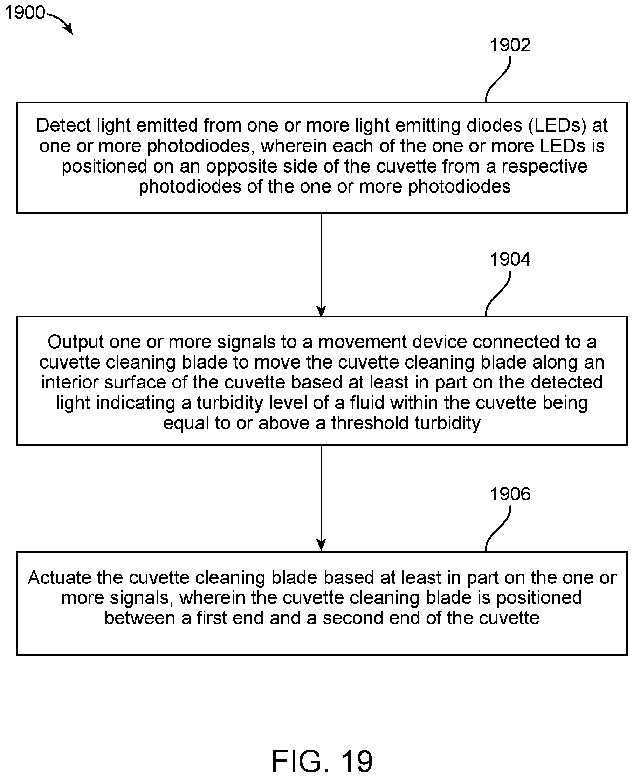

FIG. 19 is a flow chart describing an example method 1900 for a turbidity meter, according to a disclosed example. The method 1900 may be performed by one or more components of the systems and turbidity meters described herein, such as the systems 100, 200, and 300 of FIGs. 1-3, and the turbidity meters 102 and their respective components described with respect to FIGs. 1-18.

The method 1900 begins at 1902 by detecting light emitted from one or more LEDs 122 at one or more photodiodes 120, wherein each of the one or more LEDs 122 is positioned on an opposite side of the cuvette from a respective photodiode 120 of the one or more photodiodes 120. Here, the one or more photodiodes 120 may detect light from the one or more LEDs 122 located on the PCB 118. Further, each of the one or more LEDs 122 is positioned on the opposite side of the cuvette 110 on the PCB 118 from the respective one or more photodiodes 120. The one or more photodiodes 120 and one or more LEDs 122 may be positioned 180 degrees across form one another on the PCB 118.

At 1904, the method 1900 may include outputting one or more signals to a movement device connected to a cuvette cleaning blade to move the cuvette cleaning blade along an interior surface of the cuvette based at least in part on the detected light indicating a turbidity level of a fluid within the cuvette being equal to or above a threshold turbidity. For example, the control unit 124 may output one or more signals to the movement device 116 connected to the cuvette cleaning blade 112 to move the cuvette cleaning blade 112 along the interior surface of the cuvette 110 based at least in part on the detected light indicating the turbidity level of the fluid within the cuvette 110 being equal to or above a threshold turbidity. Here, the control unit 124 may be designed to output one or more signals to the movement device 116 via wired or wireless signals. Additionally, the cuvette cleaning blade 112 connected to the movement device 116 may actuate along the internal surface around the cuvette 110 internal circumference "C" in a vertical, horizontal, or diagonal manner. The cuvette cleaning blade 112 may be actuated by the movement device 116 until the fluid within the cuvette 110 is equal to or above a threshold turbidity.

At 1906, the method 1900 may further include actuating the cuvette cleaning blade based at least in part on the one or more signals, wherein the cuvette cleaning blade is positioned between a first end and a second end of the cuvette. In some examples, the movement device 116 may actuate the cuvette cleaning blade 112 based at least in part on the one or more signals, wherein the cuvette cleaning blade 112 is positioned between the first end 110a and the second end 110b of the cuvette. One end of the cuvette cleaning blade 112 may be proximate to the first end 110a of the cuvette 110, while the other end of the cuvette cleaning blade 112 may reside near the second end 110b of the cuvette 110. At the first end 110a, the cuvette cleaning blade 112 may be connected with the movement device 116 through a rotational shaft 114 at the first side 104a of the turbidity meter 102.

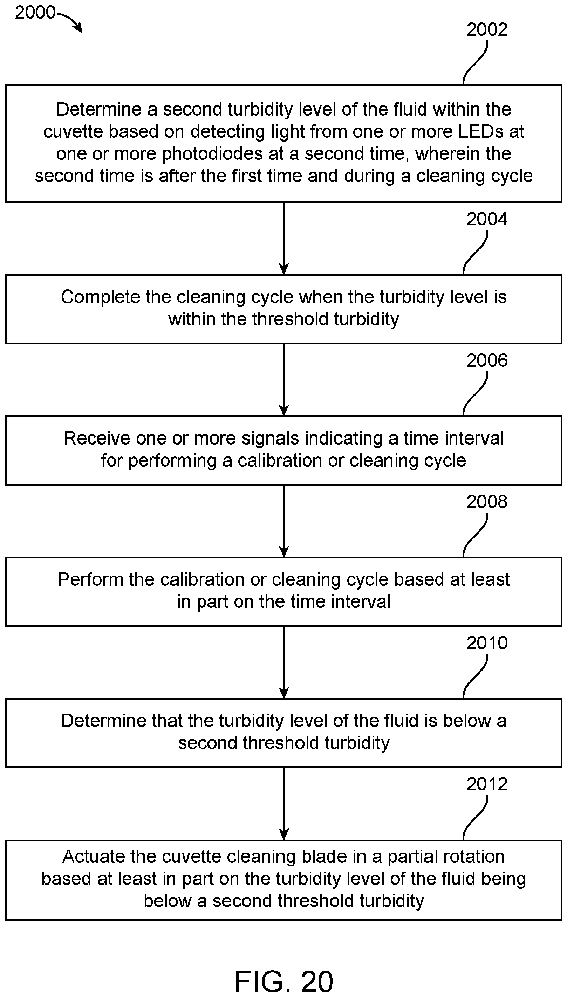

FIG. 20 is a flow chart describing an example method 2000 for cleaning a turbidity meter, according to a disclosed example. The method 2000 may be performed by one or more components of the systems and turbidity meters described herein, such as the systems 100, 200, and 300 of FIGs. 1-3, and the turbidity meters 102 and their respective components described with respect to FIGs. 1-18.

The method 2000 may include determining a second turbidity level of the fluid within the cuvette based on detecting light from one or more LEDs at one or more photodiodes at a second time, wherein the second time is after the first time and during a cleaning cycle at 2002. For example, the control unit 124 may determine a second turbidity level of the fluid within the cuvette 110 based on detecting light from one or more LEDs 122 at one or more photodiodes 120 at a second time, wherein the second time is after the first time and during a cleaning cycle. The movement device 116 and control unit 124 may be capable of determining the second turbidity level of the fluid within the cuvette 110.

At 2004, the method 2000 may include completing the cleaning cycle when the turbidity level is within the threshold turbidity. For example, the control unit 124 may determine that the cuvette 110 is relatively clean when the turbidity measured is closer to a known turbidity of a sample fluid. The threshold turbidity may be based at least in part on a known turbidity of the sample fluid.

At 2006, the method 2000 may include receiving one or more signals indicating a time interval for performing a calibration or cleaning cycle. For example, the control unit 124 may receive one or more signals indicating a time interval for performing a calibration or cleaning cycle. The control unit 124 may further determine specific intervals for preforming a calibration cycle. The one or more signals received may indicate a time interval that may be sent from the plurality of mobile units 126 or manually input by the user.

At 2008, the method 2000 may include performing the calibration or cleaning cycle based at least in part on the time interval. For example, the control unit 124 may perform the calibration or cleaning cycle based at least in part on the time interval. The time interval or cleaning cycle may be customized based on a user preference. The control unit 124 may be capable of preforming a cleaning cycle based on a threshold turbidity value.

At 2010, the method 2000 may include determining that the turbidity level of the fluid is below a second threshold turbidity. For example, the PCB 118 and the control unit 124 may determine that the turbidity level of the fluid is below a second threshold turbidity. The circuit 710, in combination with the one or more photodiodes 120 and one or more LEDs 122, may be capable of determining if the fluid is below a second threshold turbidity. The control unit 124 may adjust the second threshold turbidity based on specific user preferences or past turbidity measurements.

At 2010, the method 2000 may include actuating the cuvette cleaning blade in a partial rotation based at least in part on the turbidity level of the fluid being below a second threshold turbidity. For example, the movement device 116 and control unit 124 may actuate the cuvette cleaning blade 112 in a partial rotation based at least in part on the turbidity level of the fluid being below a second threshold turbidity. Similar to the method above, the second threshold turbidity may be customized based on the desired ranges for proper use.

The turbidity meters and techniques of the present disclosure may provide for: a) automatic self-cleaning mechanism for a cuvette inside a turbidity meter b) automatic removal of dust or dirt from an internal surface of the cuvette, c) reducing manual efforts to internally clean the cuvette of the turbidity meter, d) self-calibration and learning to determine accurate turbidity of the fluid, and e) reduced human interaction for performing the self-calibration, resulting in less time and effort.

Further aspects of the disclosure will be given by way of Example:
In Example 1, a turbidity meter, comprising: a cuvette designed to receive fluid, wherein the cuvette comprises a first end, a second end, and an internal surface; a cuvette cleaning blade positioned between the first end and the second end of the cuvette; and a movement device designed to move the cuvette cleaning blade across the internal surface of the cuvette, wherein the cuvette cleaning blade is designed to be circumferentially rotated, vertically moved, or combinations thereof.
In Example 2, the turbidity meter of Example 1, further comprising: a controller in communication with the movement device, wherein the controller is designed to instruct the movement device to actuate the cuvette cleaning blade based at least in part on a turbidity level being equal to or above a threshold turbidity.
In Example 3, the turbidity meter of Example 2, wherein the controller is further designed to receive one or more signals from a control unit over a wired or wireless connection, wherein the one or more signals instructs the controller to cause the movement device to move the cuvette cleaning blade across the internal surface of the cuvette.
In Example 4, the turbidity meter of Example 2 or 3, further comprising a cuvette housing including an alignment portion; a printed circuit board positioned on the cuvette housing; and a circuit mounted on the printed circuit board including one or more light emitting diodes (LEDs) and one or more photodiodes, wherein the circuit is designed to determine the turbidity level of a fluid inside the cuvette and output one or more signals to the controller to actuate the cuvette based at least in part on the turbidity level.
In Example 5, the turbidity meter of Example 4, wherein each of the one or more LEDs is positioned on the printed circuit board across from at least one of the one or more photodiodes.
In Example 6, the turbidity meter of any one of Examples 2 to 4, wherein the controller is further designed to: conclude a cleaning cycle after the movement device actuates the cuvette cleaning blade according to a cleaning threshold.
In Example 7, the turbidity meter of any one of Examples 1 to 6, wherein the cuvette cleaning blade actuates in a clockwise rotation along the internal surface of the cuvette or in a counterclockwise rotation along the internal surface of the cuvette.
In Example 8, the turbidity meter of any one of Examples 1 to 7, further comprising: a rotational shaft designed to connect the movement device to a proximal end of the cuvette.
In Example 9, the turbidity meter of any one of Examples 1 to 8, wherein the cuvette cleaning blade may be provided in the form of a helical shape, a flat shape or a straight shape, a disc shape, or a cylindrical shape.
In Example 10, the turbidity meter of any one of Examples 1 to 9, wherein the cuvette cleaning blade may be provided in the form of silicon, a rubber material, or a flexible membrane.
In Example 11, the turbidity meter of any one of Examples 1 to 10, further comprising: an output device designed to output an indication of a turbidity level of a fluid inside the cuvette.
In Example 12, the turbidity meter of any one of Examples 1 to 11, wherein the movement device may be provided in the form of a direct current motor, a stepper motor, a servo motor, or an actuator.
In Example 13, a turbidity meter system, comprising: a controller including a communication module designed to transmit and receive signals; a cuvette designed to receive fluid, wherein the cuvette includes an internal surface and an external surface; a cuvette cleaning blade proximate to the internal surface of the cuvette; and a movement device in communication with the controller, wherein the movement device is designed to move the cuvette cleaning blade across the internal surface of the cuvette based at least in part on instructions from the controller.
In Example 14, the turbidity meter system of Example 13, wherein the controller is further designed to: receive one or more signals indicating a plurality of threshold limits associated with a customizable cycle threshold related to operating the cuvette cleaning blade.
In Example 15, the turbidity meter system of Example 14, wherein the controller is further designed to: transmits a signal indicating a status of the turbidity meter system to one or more mobile units via a wired connection or a wireless connection.
In Example 16, the turbidity meter system of any one of Examples 13 to 15, wherein the controller is further designed to: implement a cleaning cycle based on a turbidity level of a fluid within the cuvette.
In Example 17, a method for cleaning a cuvette of a turbidity meter, comprising: detecting light emitted from one or more light emitting diodes (LEDs) at one or more photodiodes, wherein each of the one or more LEDs is positioned on an opposite side of the cuvette from a respective photodiode of the one or more photodiodes; outputting one or more signals to a movement device connected to a cuvette cleaning blade to move the cuvette cleaning blade along an interior surface of the cuvette based at least in part on the detected light indicating a turbidity level of a fluid within the cuvette being equal to or above a threshold turbidity; and actuating the cuvette cleaning blade based at least in part on the one or more signals, wherein the cuvette cleaning blade is positioned between a first end and a second end of the cuvette.
In Example 18, the method of Example 17, wherein detecting light emitted from one or more LEDs at one or more photodiodes is at a first time, and wherein the turbidity level is a first turbidity level, the method further comprising: determining a second turbidity level of the fluid within the cuvette based on detecting light from one or more LEDs at one or more photodiodes at a second time, wherein the second time is after the first time and during a cleaning cycle; and completing the cleaning cycle when the turbidity level is within the threshold turbidity.
In Example 19, the method of Example 17 or 18, further comprising: receiving one or more signals indicating a time interval for performing a calibration or cleaning cycle; and performing the calibration or cleaning cycle based at least in part on the time interval.
In Example 20, the method of any one of Examples 17 to 19, further comprising: determining that the turbidity level of the fluid is below a second threshold turbidity; and actuating the cuvette cleaning blade in a partial rotation based at least in part on the turbidity level of the fluid being below a second threshold turbidity.

Information and signals described herein may be represented using any of a variety of different technologies and techniques. For example, data, instructions, commands, information, signals, bits, symbols, and chips that may be referenced throughout the description may be represented by electromagnetic waves, voltages, currents, magnetic fields or particles, optical fields or particles, or any combination thereof.

The various illustrative blocks and components described in connection with the disclosure herein may be implemented or performed using a general-purpose processor, a Digital Signal Processing device (DSP), an Application-Specific Integrated Circuit (ASIC), a Central Processing Unit (CPU), a graphics processing unit (GPU), a neural processing unit (NPU), an Field Programmable Gate Array (FPGA) or other programmable logic device, discrete gate or transistor logic, discrete hardware components, or any combination thereof designed to perform the functions described herein. A general-purpose processor may be a microprocessor but, in the alternative, the processor may be any processor, controller, microcontroller, or state machine. A processor may also be implemented as a combination of computing devices (for example, a combination of a DSP and a microprocessor, multiple microprocessors, one or more microprocessors in conjunction with a DSP core, or any other such configuration). Any functions or operations described herein as being capable of being performed by a processor may be performed by multiple processors that, individually or collectively, are capable of performing the described functions or operations.

The functions described herein may be implemented using hardware, software executed by one or more processors, firmware, or any combination thereof. If implemented using software executed by one or more processors, the functions may be stored as or transmitted using one or more instructions or code of a computer-readable medium. Other examples and implementations are within the scope of the disclosure and appended claims. For example, due to the nature of software, functions described herein may be implemented using software executed by one or more processors, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one location to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer or a general-purpose or special-purpose processor. Also, any connection may be properly termed a computer-readable medium. For example, if the software may be transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk, and Blu-ray disc. Disks may reproduce data magnetically, and discs may reproduce data optically using lasers. Combinations of the above are also included within the scope of computer-readable media. Any functions or operations described herein as being capable of being performed by a memory may be performed by multiple memories that, individually or collectively, are capable of performing the described functions or operations.

As used herein, including in the claims, "or" as used in a list of items (for example, a list of items prefaced by a phrase such as "at least one of' or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that may be described as "based on condition A" may be based on both a condition A and a condition B. For example, as used herein, the phrase "based on" shall be construed in the same manner as the phrase "based at least in part on."

As used herein, including in the claims, the article "a" before a noun may be openended and understood to refer to "at least one" of those nouns or "one or more" of those nouns. Thus, the terms "a," "at least one," "one or more," and "at least one of one or more" may be interchangeable. For example, if a claim recites "a component" that performs one or more functions, each of the individual functions may be performed by a single component or by any combination of multiple components. Thus, the term "a component" having characteristics or performing functions may refer to "at least one of one or more components" having a particular characteristic or performing a particular function. Subsequent reference to a component introduced with the article "a" using the terms "the" or "said" may refer to any or all of the one or more components. For example, a component introduced with the article "a" may be understood to mean "one or more components," and referring to "the component" subsequently in the claims may be understood to be equivalent to referring to "at least one of the one or more components." Similarly, subsequent reference to a component introduced as "one or more components" using the terms "the" may refer to any or all of the one or more components. For example, referring to "the one or more components" subsequently in the claims may be understood to be equivalent to referring to "at least one of the one or more components."

The term "determine" or "determining" encompasses a variety of actions and, therefore, "determining" can include calculating, computing, processing, deriving, investigating, looking up (such as via looking up in a table, a database, or another data structure), identifying, ascertaining, and the like. Also, "determining" can include receiving (for example, receiving information), accessing (for example, accessing data stored in memory), retrieving, and the like. Also, "determining" can include resolving, obtaining, selecting, choosing, establishing, and other such similar actions.

In the appended FIGs., similar components or features may have the same reference label. Further, various components of the same type may be distinguished by following the reference label by a dash and a second label that distinguishes among the similar components. If just the first reference label may be used in the specification, the description may be applicable to any one of the similar components having the same first reference label irrespective of the second reference label or other subsequent reference label.

The description set forth herein, in connection with the appended drawings, describes example configurations and does not represent all the examples that may be implemented or that are within the scope of the claims. The term "example" used herein means "serving as an example, instance, or illustration" and not "preferred" or "advantageous over other examples." The detailed description includes specific details for the purpose of providing an understanding of the described techniques. These techniques, however, may be practiced without these specific details. In some FIGs., known structures and devices are shown in block diagram form in order to avoid obscuring the concepts of the described examples.

In other instances, other configurations of the systems and methods described herein are possible. For example, those of skill in the art will recognize, according to the principles and concepts disclosed herein, that various combinations, sub-combinations, and substitutions of the components discussed above can provide appropriate control for a variety of different configurations of robotic platforms for a variety of applications.

It will be appreciated by those skilled in the art that while the disclosure has been described above in connection with particular embodiments and examples, the disclosure is not necessarily so limited, and that numerous other embodiments, examples, uses, modifications and departures from the embodiments, examples, and uses are intended to be encompassed by the claims attached hereto. The entire disclosure of each patent and publication cited herein is incorporated by reference, as if each such patent or publication were individually incorporated by reference herein. Various features and advantages of the disclosure are set forth in the following claims.

## Claims

1. A turbidity meter, comprising:
a cuvette designed to receive fluid, wherein the cuvette comprises a first end, a second end, and an internal surface;
a cuvette cleaning blade positioned between the first end and the second end of the cuvette; and
a movement device designed to move the cuvette cleaning blade across the internal surface of the cuvette, wherein the cuvette cleaning blade is designed to be circumferentially rotated, vertically moved, or combinations thereof.

2. The turbidity meter of claim 1, further comprising:
a controller in communication with the movement device, wherein the controller is designed to instruct the movement device to actuate the cuvette cleaning blade based at least in part on a turbidity level being equal to or above a threshold turbidity.

3. The turbidity meter of claim 2, wherein the controller is further designed to receive one or more signals from a control unit over a wired or wireless connection, wherein the one or more signals instructs the controller to cause the movement device to move the cuvette cleaning blade across the internal surface of the cuvette.

4. The turbidity meter of claim 2 or 3, further comprising:
a cuvette housing including an alignment portion;
a printed circuit board positioned on the cuvette housing; and
a circuit mounted on the printed circuit board including one or more light emitting diodes (LEDs) and one or more photodiodes, wherein the circuit is designed to determine the turbidity level of a fluid inside the cuvette and output one or more signals to the controller to actuate the cuvette based at least in part on the turbidity level.

5. The turbidity meter of claim 4, wherein each of the one or more LEDs is positioned on the printed circuit board across from at least one of the one or more photodiodes.

6. The turbidity meter of any one of claims 2 to 5, wherein the controller is further designed to:
conclude a cleaning cycle after the movement device actuates the cuvette cleaning blade according to a cleaning threshold.

7. The turbidity meter of any one of claims 1 to 6, wherein the cuvette cleaning blade actuates in a clockwise rotation along the internal surface of the cuvette or in a counterclockwise rotation along the internal surface of the cuvette.

8. The turbidity meter of any one of claims 1 to 7, further comprising:
a rotational shaft designed to connect the movement device to a proximal end of the cuvette.

9. The turbidity meter of any one of claims 1 to 8, wherein the cuvette cleaning blade may be provided in the form of a helical shape, a flat shape or a straight shape, a disc shape, or a cylindrical shape.

10. The turbidity meter of any one of claims 1 to 9, wherein the cuvette cleaning blade may be provided in the form of silicon, a rubber material, or a flexible membrane.

11. The turbidity meter of any one of claims 1 to 10, further comprising:
an output device designed to output an indication of a turbidity level of a fluid inside the cuvette.

12. The turbidity meter of any one of claims 1 to 11, wherein the movement device may be provided in the form of a direct current motor, a stepper motor, a servo motor, or an actuator.

13. A method for cleaning a cuvette of a turbidity meter, comprising:
detecting light emitted from one or more light emitting diodes (LEDs) at one or more photodiodes, wherein each of the one or more LEDs is positioned on an opposite side of the cuvette from a respective photodiode of the one or more photodiodes;
outputting one or more signals to a movement device connected to a cuvette cleaning blade to move the cuvette cleaning blade along an interior surface of the cuvette based at least in part on the detected light indicating a turbidity level of a fluid within the cuvette being equal to or above a threshold turbidity; and
actuating the cuvette cleaning blade based at least in part on the one or more signals, wherein the cuvette cleaning blade is positioned between a first end and a second end of the cuvette.

14. The method of claim 13, wherein detecting light emitted from one or more LEDs at one or more photodiodes is at a first time, and wherein the turbidity level is a first turbidity level, the method further comprising:
determining a second turbidity level of the fluid within the cuvette based on detecting light from one or more LEDs at one or more photodiodes at a second time, wherein the second time is after the first time and during a cleaning cycle; and
completing the cleaning cycle when the turbidity level is within the threshold turbidity.

15. The method of claim 13 or 14, further comprising:
receiving one or more signals indicating a time interval for performing a calibration or cleaning cycle; and
performing the calibration or cleaning cycle based at least in part on the time interval; or
further comprising:
determining that the turbidity level of the fluid is below a second threshold turbidity; and
actuating the cuvette cleaning blade in a partial rotation based at least in part on the turbidity level of the fluid being below a second threshold turbidity.
